# EUROPEAN PATENT APPLICATION

(11) **EP 4 284 074 A1**
(43) Date of publication of application: **29.11.2023**
(21) Application number: 22752333.9
(22) Date of filing: 10.02.2022
(51) Int. Cl.: H04W 52/02

(54) **SIDELINK COMMUNICATION METHOD AND APPARATUS**

(30) Priority: 10.02.2021 CN 202110185648
(71) Applicant: Huawei Technologies Co., Ltd., Shenzhen, Guangdong 518129 (CN)
(72) Inventor: LIU, Jun, Shenzhen, Guangdong 518129 (CN); LIU, Nannan, Shenzhen, Guangdong 518129 (CN); XIE, Xi, Shenzhen, Guangdong 518129 (CN)
(74) Representative: Pfenning, Meinig & Partner mbB
(86) International application number: PCT/CN2022/075845
(87) International publication number: WO 2022/171173

(57) **Abstract**

A sidelink communication method and apparatus are provided. The method includes: A first communication device receives sidelink control information from a second communication device. The first communication device starts a first timer based on an SL HARQ feedback resource, where the SL HARQ feedback resource is used for transmitting a HARQ feedback of the sidelink control information or SL data scheduled by using the sidelink control information. The first communication device starts or skips starting a second timer based on the first timer. According to the method of embodiments of this application, the first communication device can start the first timer and the second timer associated with SL DRX, thereby reducing power consumption of the communication device.

## Description

### CROSS-REFERENCE TO RELATED APPLICATIONS

This application claims priority to Chinese Patent Application No. 202110185648.0, filed on February 10, 2021 and entitled "SIDELINK COMMUNICATION METHOD AND APPARATUS", which is incorporated herein by reference in its entirety.

### TECHNICAL FIELD

Embodiments of this application relate to the field of communication technologies, and in particular, to a sidelink communication method and apparatus.

### BACKGROUND

In a wireless communication system, in order to reduce power consumption of user equipment (user equipment, UE) while ensuring that data can be effectively transmitted, discontinuous reception (discontinuous reception, DRX) is introduced. The DRX mechanism controls a behavior of the UE monitoring a physical downlink control channel (physical downlink control channel, PDCCH). If the DRX mechanism is unavailable, the UE keeps monitoring the PDCCH to check whether there is any information from a serving cell. However, in many cases in reality, the UE does not keep exchanging effective information with a network, does not keep performing an upload or download service, or does not keep transmitting voice data during a call. If the UE continuously monitors the PDCCH when there is no data exchange between the UE and the network, power consumption is obviously high. Therefore, on the premise of ensuring effective data transmission, a designed mechanism for reducing UE power is DRX. When DRX is configured, the UE may periodically enter a sleep state (sleep mode) at a specific time. The UE does not need to continuously monitor the PDCCH. When the UE needs to monitor the PDCCH, the UE wakes up (wake up) from the sleep state. In this way, power saving can be achieved for the UE. This has certain impact on a data transmission delay. However, if the delay is controlled within a range accepted by a user, performing DRX is meaningful to reduce power consumption. The foregoing describes DRX over the Uu air interface, which may be referred to as Uu DRX for short.

Similar to the foregoing Uu DRX, a DRX mechanism is also proposed in a sidelink (sidelink, SL), which may be referred to as SL DRX for short. How the UE uses the foregoing Uu DRX and/or SL DRX to reduce power consumption of the UE is a problem to be resolved in embodiments of this application.

### SUMMARY

Embodiments of this application provide a sidelink communication method and apparatus, so that a communication device can better use Uu DRX and/or SL DRX, thereby reducing power consumption of a terminal device.

According to a first aspect, a sidelink communication method is provided, including: receiving, by a first communication device, sidelink control information from a second communication device; starting, by the first communication device, a first timer based on a sidelink SL hybrid automatic repeat request HARQ feedback resource, where the SL HARQ feedback resource is used for transmitting a HARQ feedback of the sidelink control information or SL data scheduled by using the sidelink control information. Optionally, the first communication device starts or does not start a second timer based on the first timer, where the first timer is used to indicate an expected minimum duration before resource configuration information or grant information for SL retransmission arrives, and the second timer is used to indicate a maximum duration required for receiving the resource configuration information or the grant information for the SL retransmission.

According to the foregoing method, for example, the first communication device is RX UE, and the second communication device is TX UE. The TX UE and the RX UE can start the first timer and the second timer based on the SL HARQ feedback resource, so that starting of the first timer and starting of the second timer are aligned, thereby preventing starting of the first timer and the second timer when the TX UE sends a NACK to a base station. However, since the RX UE side fails to send the HARQ feedback, the first timer and the second timer are not started, and therefore the RX UE is in a sleep state. As a result, the RX UE cannot receive SL data retransmitted by the TX UE, causing a packet loss on the RX UE side.

In a possible implementation, the starting, by the first communication device, a first timer based on an SL HARQ feedback resource includes: starting, by the first communication device, the first timer in a first time unit in the SL HARQ feedback resource; or starting, by the first communication device, the first timer in a first time unit in a configured SL HARQ feedback resource; or
starting, by the first communication device, the first timer in a first time unit after the SL HARQ feedback resource; or starting, by the first communication device, the first timer in a first time unit after a configured SL HARQ feedback resource.

In a possible implementation, if the second timer is running, the method further includes: stopping, by the first communication device, the second timer.

In a possible implementation, the starting, by the first communication device, a first timer based on an SL HARQ feedback resource includes: failing to send or skipping sending, by the first communication device, the HARQ feedback, where the HARQ feedback is an acknowledgment ACK or a negative acknowledgment NACK; starting, by the first communication device, the first timer based on the SL HARQ feedback resource.

In a possible implementation, the starting or skipping starting, by the first communication device, a second timer based on the first timer includes: when the first timer expires, and the first communication device successfully decodes or fails to decode the sidelink control information or the SL data scheduled by using the sidelink control information, starting, by the first communication device, the second timer; or when the first timer expires, starting, by the first communication device, the second timer.

In a possible implementation, the starting or skipping starting, by the first communication device, a second timer based on the first timer includes: when the first timer expires, and the first communication device fails to send or does not send the HARQ feedback, starting, by the first communication device, the second timer, where the HARQ feedback is an ACK or a NACK; or when the first timer expires, and the first communication device successfully sends or sends the HARQ feedback and the HARQ feedback is a NACK, starting, by the first communication device, the second timer.

In a possible implementation, the failing to send or skipping sending, by the first communication device, the HARQ feedback includes: failing to send or skipping sending, by the first communication device, the HARQ feedback due to prioritization (prioritization) or a conflict.

In a possible implementation, the starting, by the first communication device, a first timer based on an SL HARQ feedback resource includes: successfully sending or failing to send, by the first communication device, the HARQ feedback of the SCI or the SL data scheduled by using the SCI; and starting, by the first communication device, the first timer based on the SL HARQ feedback resource.

In a possible implementation, the starting or skipping starting, by the first communication device, a second timer based on the first timer includes: when the first timer expires, starting, by the first communication device, the second timer. (The second timer is started regardless of whether the SL data is successfully decoded.)

According to a second aspect, a sidelink communication method is provided, including: sending, by a second communication device, sidelink control information to a first communication device; starting, by the second communication device, a first timer based on an SL HARQ feedback resource; and starting or skipping starting, by the second communication device, a second timer based on the first timer; where the first timer is used to indicate an expected minimum duration before resource configuration information or grant information for SL retransmission arrives, and the second timer is used to indicate a maximum duration required for receiving the resource configuration information or the grant information for the SL retransmission.

In a possible implementation, the starting, by the second communication device, a first timer based on an SL HARQ feedback resource includes: starting, by the second communication device, the first timer in a first time unit in the SL HARQ feedback resource; or
starting, by the second communication device, the first timer in a first time unit in a configured SL HARQ feedback resource; or starting, by the second communication device, the first timer in a first time unit after the SL HARQ feedback resource; or starting, by the second communication device, the first timer in a first time unit after a configured SL HARQ feedback resource.

In a possible implementation, if the second timer is running, the method further includes: stopping, by the second communication device, the second timer.

In a possible implementation, the starting or skipping starting, by the second communication device, a second timer based on the first timer includes: when the first timer expires, starting, by the second communication device, the second timer.

In a possible implementation, the starting or skipping starting, by the second communication device, a second timer based on the first timer includes: when the first timer expires, if the second communication device successfully receives a HARQ feedback, the HARQ feedback includes a HARQ feedback of the sidelink control information or SL data scheduled by using the sidelink control information, and the HARQ feedback is a NACK, or if the second communication device fails to receive a HARQ feedback, or if the second communication device sends the HARQ feedback to a third communication device and the HARQ feedback is a NACK, starting, by the second communication device, the second timer.

In a possible implementation, the third communication device may be a network device of the second communication device.

According to a third aspect, a sidelink communication method is provided, including: sending, by a first communication device, sidelink control information to a second communication device; determining, by the first communication device, that no HARQ feedback is received, where the HARQ feedback includes a HARQ feedback of sidelink control information or SL data scheduled by using the sidelink control information; and sending, by the first communication device, first information to the second communication device, where the first information indicates that the first communication device receives no HARQ feedback.

According to the foregoing method, for example, the first communication device is TX UE, and the second communication device is RX UE. When the TX UE determines that no HARQ feedback of the RX UE is received due to a reason such as a sending and receiving conflict or prioritization of the TX UE, the TX UE may send indication information to the RX UE. When the RX UE receives the indication information, and the first timer expires, the second timer is started regardless of whether the data is successfully decoded, so that the RX UE is in a wakeup state and receives retransmission sent by the TX UE, thereby avoiding a packet loss on the RX UE side.

In a possible implementation, the determining, by the first communication device, that no HARQ feedback is received includes: failing to receive, by the first communication device, the HARQ feedback due to a sending and receiving conflict or prioritization (prioritization).

According to a fourth aspect, a sidelink communication method is provided, including: receiving, by a second communication device, sidelink control information from a first communication device; sending, by the second communication device, a HARQ feedback to the first communication device, where the HARQ feedback includes a HARQ feedback of sidelink control information or SL data scheduled by using the sidelink control information; and receiving, by the second communication device, first indication information from the first communication device, where the first indication information indicates that the first communication device receives no HARQ feedback.

In a possible implementation, the method further includes: after the second communication device sends the HARQ feedback, starting a fifth timer, where the second communication device is in an active time during running of the fifth timer.

In a possible implementation, the failing to receive, by the first communication device, the HARQ feedback includes: failing to receive, by the first communication device, the HARQ feedback due to a sending and receiving conflict or prioritization (prioritization).

In a possible implementation, the method further includes: when or after the second communication device sends the HARQ feedback, starting a first timer; or after the second communication device sends the HARQ feedback, starting the first timer in a first time unit.

In a possible implementation, the method further includes: when the first timer expires, starting, by the second communication device, the second timer.

According to a fifth aspect, a sidelink communication method is provided, including: sending, by a first communication device, sidelink control information to a second communication device; determining, by the first communication device, that no HARQ feedback is received, where the HARQ feedback includes a HARQ feedback of sidelink control information or SL data scheduled by using the sidelink control information; and sending, by a first communication device, second information, or a NACK and second information to a third communication device; where the second information indicates that the first communication device receives no HARQ feedback, or the second information indicates that the third communication device does not schedule, during running of the second timer of the HARQ process corresponding to the NACK, SL new transmission or retransmission of another HARQ process used for the SL, and the second timer is used to indicate a maximum duration required for receiving the resource configuration information or the grant information for the SL retransmission.

According to the foregoing method, for example, the first communication device is TX UE, the second communication device is RX UE, and the third communication device is a base station. When the RX UE successfully sends the HARQ feedback, and the RX UE fails to receive the foregoing HARQ feedback, the TX UE may report a NACK to the base station. An improvement of this application is as follows: In addition to reporting a NACK to the base station, the TX UE further reports second information to the base station, where the second information is used to instruct the base station to schedule only retransmission of a current HARQ process during running of the second timer of the HARQ process corresponding to the NACK. The reasons are as follows: In a current solution, after the RX UE sends the HARQ feedback, the RX UE may start the first timer. When the first timer expires, and the RX UE fails to decode data, that is, the RX UE starts the second timer only when the HARQ feedback sent by the RX UE is a NACK. However, when the first timer expires, and the RX UE successfully decodes data, that is, when the HARQ feedback sent by the RX UE indicates an ACK, the RX UE does not start the second timer. In embodiments of this application, because the TX UE receives no HARQ feedback of the RX UE, the TX UE does not know whether the HARQ feedback sent by the RX UE is a NACK or an ACK. Therefore, in embodiments of this application, in the foregoing case, the TX UE no longer determines whether the HARQ feedback sent by the RX UE indicates an ACK or a NACK, and the TX UE sends the second information to the base station in a unified manner, to instruct the base station to schedule only retransmission of a current SL HARQ process, and not to schedule SL new transmission or retransmission of another SL process. Correspondingly, the TX UE sends only retransmission of the current SL HARQ process to the RX UE. The advantages are as follows: If the HARQ feedback sent by the RX UE is a NACK, the RX UE starts the second timer on the SL DRX, and the RX UE may receive the retransmission of the current SL HARQ process sent by the TX UE. If the HARQ feedback sent by the RX UE indicates an ACK, the RX UE may not receive the retransmission of the current SLHARQ process. However, since the HARQ feedback fed back by the RX UE indicates an ACK, which indicates that data of a corresponding SL process has been successfully decoded by the RX UE during last transmission, the failure of receiving the retransmission during the current transmission does not matter.

In a possible implementation, the third communication device may be a network device of the first communication device.

According to a sixth aspect, a sidelink communication method is provided, including: receiving, by a third communication device, second information or a NACK and the second information from a first communication device; where the second information indicates that the first communication device receives no HARQ feedback, or the second information indicates that the third communication device does not schedule, during running of the second timer of the HARQ process corresponding to the NACK, SL new transmission or retransmission of another HARQ process used for the SL, and the second timer is used to indicate a maximum duration required for receiving the resource configuration information or the grant information for the SL retransmission; and skip scheduling, by the third communication device during running of the second timer of the HARQ process corresponding to the NACK, the SL new transmission or the retransmission of another HARQ process used for the SL.

In a possible implementation, the third communication device may be a network device of the first communication device.

According to a seventh aspect, a sidelink communication method is provided, including: receiving, by a first communication device, information about a first DRX configuration and/or information about a first interval from a second communication device, where the first DRX configuration is a DRX configuration between the first communication device and a third communication device, the first interval is an interval between a first resource and a second resource, the first resource is a resource for the second communication device to send an SL HARQ feedback to the third communication device, and the second resource is a resource for the first communication device to send an SL HARQ feedback to the second communication device; determining, by the first communication device, a second DRX configuration based on the information about the first DRX configuration and/or the information about the first interval, where the second DRX configuration is a DRX configuration between the first communication device and the second communication device; or sending, by the first communication device, the information about the first DRX configuration and/or the information about the first interval to the third communication device.

According to the foregoing method, for example, the first communication device is RX UE, and the second communication device is TX UE. Therefore, through the method, a configuration of SL DRX can match a configuration of Uu DRX, thereby preventing a failure of the RX UE to receive SL retransmission and/or new transmission scheduled by a base station during running of a second timer of the Uu DRX.

In a possible implementation, the third communication device may be a network device of the second communication device.

In a possible implementation, the first interval includes a minimum value of the interval between the first resource and the second resource.

In a possible implementation, the method further includes: when the first DRX configuration does not match the second DRX configuration, sending, by the first communication device, first information to the second communication device, where the first information notifies the second communication device that the first DRX configuration does not match the second DRX configuration.

In a possible implementation, the method further includes: sending, by the first communication device, first request information to the second communication device, where the first request information is used to request the second communication device to send the information about the first DRX configuration and/or the information about the first interval to the first communication device.

In a possible implementation, the first DRX configuration includes a configuration of a third timer and a configuration of a fourth timer, and the second DRX configuration includes a configuration of a first timer and a configuration of a second timer; and the first timer and/or the third timer is used to indicate an expected minimum duration before resource configuration information or grant information for SL retransmission arrives, and the second timer and/or the fourth timer is used to indicate a maximum duration required for receiving the resource configuration information or the grant information for the SL retransmission.

According to an eighth aspect, a sidelink communication method is provided, including: determining, by a second communication device, information about a first DRX configuration and/or information about a first interval, where the first DRX configuration is a DRX configuration between the second communication device and a third communication device, the first interval is an interval between a first resource and a second resource, the first resource is a resource for the second communication device to send an SL HARQ feedback to the third communication device, and the second resource is a resource for the first communication device to send an SL HARQ feedback to the second communication device; and sending, by the second communication device, the information about the first DRX configuration and/or the information about the first interval to the first communication device.

In a possible implementation, the third communication device may be a network device of the second communication device.

In a possible implementation, the first interval includes a minimum value of the interval between the first resource and the second resource.

In a possible implementation, the method further includes: receiving, by the second communication device, first information from the first communication device, where the first information notifies the second communication device that the first DRX configuration does not match a second DRX configuration, the second DRX configuration is DRX between the first communication device and the second communication device, and the second DRX configuration is used for SL communication between the first communication device and the second communication device, or the second DRX configuration is used for the first communication device to receive information sent by the second communication device.

In a possible implementation, when a first condition is met, the step of sending, by the second communication device, the information about the first DRX configuration and/or the information about the first interval to the first communication device is performed.

In a possible implementation, the first condition includes at least one of the following: the first interval changes;
a variation of the first interval is greater than a first threshold; the information about the first DRX configuration changes; and a variation of the information about the first DRX configuration is greater than a second threshold.

In a possible implementation, the method further includes: receiving, by the second communication device, first request information from the first communication device, where the first request information is used to request the second communication device to send the information about the first DRX configuration and/or the information about the first interval to the first communication device.

In a possible implementation, the first DRX configuration includes a configuration of a third timer and a configuration of a fourth timer, and the second DRX configuration includes a configuration of a first timer and a configuration of a second timer; and the first timer and/or the third timer is used to indicate an expected minimum duration before resource configuration information or grant information for SL retransmission arrives, and the second timer and/or the fourth timer is used to indicate a maximum duration required for receiving the resource configuration information or the grant information for the SL retransmission.

According to a ninth aspect, a sidelink communication method is provided, including: receiving, by a first communication device, second information from a third communication device, where the second information indicates whether an SL HARQ feedback resource exists, and the SL HARQ feedback resource is used by the first communication device to send an SL HARQ feedback to the third communication device; sending, by the first communication device, third information to a second communication device based on the second information, where the third information notifies whether to start, on a second DRX, a first timer and/or a second timer of a corresponding SL process, or the third information indicates whether the SL HARQ feedback resource exists; and/or determining, by the first communication device based on the second information, whether to start, on a first DRX, a third timer and/or a fourth timer of a corresponding SL process and/or determining whether to start, on the second DRX, the first timer and/or the second timer of the corresponding SL process. The first DRX is DRX between the first communication device and the third communication device, the second DRX is DRX between the first communication device and the second communication device, the first timer and/or the third timer is used to indicate an expected minimum duration before resource configuration information or grant information for SL retransmission arrives, and the second timer and/or the fourth timer is used to indicate a maximum duration required for receiving the resource configuration information or the grant information for the SL retransmission.

According to the foregoing method, for example, the TX UE is the first communication device, and the RX UE is the second communication device. Therefore, a waste of power consumption of the RX UE caused when the RX UE does not know that the TX UE does not start a corresponding first timer and sl second timer on the Uu DRX since no PUCCH resource is configured for an SL HARQ process and therefore starts a corresponding second timer on the SL DRX can be avoided.

In a possible implementation, the third communication device may be a network device of the first communication device.

In a possible implementation, that the second information indicates whether an SL HARQ feedback resource exists includes: The second information indicates whether the SL HARQ feedback resource exists in a first SL process or a first SL transport block TB or does not exist.

In a possible implementation, when the second information indicates that the SL HARQ feedback resource exists, the third information is used to instruct to start the first timer and/or the second timer in an SL process corresponding to the second DRX, or the third information indicates that the SL HARQ feedback resource exists; and/or when a first condition is met, the first communication device starts, on the first DRX, the third timer and/or the fourth timer of the corresponding SL process, and/or when a second condition is met, the first communication device starts, on the second DRX, the first timer and/or the second timer of the corresponding SL process.

In a possible implementation, when the second information indicates that no SL HARQ feedback resource exists, the second information notifies that the first timer and/or the second timer in an SL process corresponding to the second DRX is not started; or the second information indicates that no SL HARQ feedback resource exists; and/or when the first condition is met, the first communication device does not start, on the first DRX, the third timer and/or the fourth timer of the corresponding SL process, and/or when the second condition is met, the first communication device does not start, on the second DRX, a first timer and/or a second timer of the corresponding SL process.

According to a tenth aspect, a sidelink communication method is provided, including: receiving, by a second communication device, third information from a first communication device, where the third information notifies whether to start, on a second DRX, a first timer and/or a second timer of a corresponding SL process, or the third information indicates whether an SL HARQ feedback resource exists; and determining, by the second communication device, whether to start, on the second DRX, the first timer and/or the second timer of the corresponding SL process, where the second DRX is DRX between the first communication device and the second communication device, the first timer is used to indicate an expected minimum duration before resource configuration information or grant information for SL retransmission arrives, and the second timer is used to indicate a maximum duration required for receiving the resource configuration information or the grant information for the SL retransmission.

In a possible implementation, when the third information is used to instruct to start the first timer and/or the second timer in an SL process corresponding to the second DRX, or when the third information indicates that the SL HARQ feedback resource exists, and a third condition is met, a second terminal device starts the first timer and/or the second timer of the corresponding SL process.

In a possible implementation, when the third information notifies that the first timer and/or the second timer in the SL process corresponding to the second DRX is not started, or when the third information indicates that when the SL HARQ feedback resource exists, and the third condition is met, the second communication device does not start the first timer and/or the second timer of the corresponding SL process.

According to an eleventh aspect, a sidelink communication apparatus is provided. The communication apparatus may be a first communication device, or may be a chip in the first communication device. The apparatus has a function of implementing the foregoing first aspect. The function may be implemented by hardware, or may be implemented by hardware executing corresponding software. The hardware or software includes one or more modules or units corresponding to the foregoing function. For example, in a possible implementation, the apparatus includes: a transceiver unit, configured to receive sidelink control information from a second communication device; and a processing unit, configured to start a first timer based on a sidelink SL hybrid automatic repeat request HARQ feedback resource, where the SL HARQ feedback resource is used for transmitting a HARQ feedback of the sidelink control information or SL data scheduled by using the sidelink control information, where the processing unit is further configured to start or skip starting a second timer based on the first timer; and the first timer is used to indicate an expected minimum duration before resource configuration information or grant information for SL retransmission arrives, and the second timer is used to indicate a maximum duration required for receiving the resource configuration information or the grant information for the SL retransmission.

In a possible design, the starting the first timer based on the SL HARQ feedback resource includes: starting the first timer in a first time unit in the SL HARQ feedback resource; or starting the first timer in a first time unit in a configured SL HARQ feedback resource; or starting the first timer in a first time unit after the SL HARQ feedback resource; or starting the first timer in a first time unit after a configured SL HARQ feedback resource.

In a possible implementation, the starting the first timer based on the SL HARQ feedback resource includes: failing to send or skipping sending the HARQ feedback, where the HARQ feedback is an acknowledgment ACK or a negative acknowledgment NACK; and starting the first timer based on the SL HARQ feedback resource.

In a possible implementation, the starting or skipping starting the second timer based on the first timer includes: when the first timer expires, and the sidelink control information or the SL data scheduled by using the sidelink control information is successfully decoded or fails to be decoded, starting, by the first communication device, the second timer, or when the first timer expires, starting the second timer.

In a possible implementation, the starting or skipping starting the second timer based on the first timer includes: when the first timer expires, and the HARQ feedback fails to be sent or is not sent, starting, by the first communication device, the second timer, where the HARQ feedback is an ACK or a NACK; or when the first timer expires, and the HARQ feedback is successfully sent or sent and the HARQ feedback is a NACK, starting, by the first communication device, the second timer.

According to a twelfth aspect, a sidelink communication apparatus is provided. The communication apparatus may be a second communication device, or may be a chip in the second communication device. The apparatus has a function of implementing the foregoing second aspect. The function may be implemented by hardware, or may be implemented by hardware executing corresponding software. The hardware or software includes one or more modules or units corresponding to the foregoing function. For example, in a possible implementation, the apparatus includes: a transceiver unit, configured to send sidelink control information to a first communication device; and a processing unit, configured to start a first timer based on an SL HARQ feedback resource; where
the processing unit is further configured to start or skip starting a second timer based on the first timer; and the first timer is used to indicate an expected minimum duration before resource configuration information or grant information for SL retransmission arrives, and the second timer is used to indicate a maximum duration required for receiving the resource configuration information or the grant information for the SL retransmission.

In a possible implementation, the starting or skipping starting the second timer based on the first timer includes: when the first timer expires, if the second communication device successfully receives a HARQ feedback, the HARQ feedback includes a HARQ feedback of the sidelink control information or SL data scheduled by using the sidelink control information, and the HARQ feedback is a NACK, or if the second communication device fails to receive a HARQ feedback, or if the second communication device sends the HARQ feedback to a third communication device and the HARQ feedback is a NACK, starting, by the second communication device, the second timer.

According to a thirteenth aspect, a sidelink communication apparatus is provided. The communication apparatus may be a first communication device, or may be a chip in the first communication device. The apparatus has a function of implementing the foregoing third aspect. The function may be implemented by hardware, or may be implemented by hardware executing corresponding software. The hardware or software includes one or more modules or units corresponding to the foregoing function. For example, in a possible implementation, the apparatus includes: a transceiver unit, configured to send sidelink control information to a second communication device; and a processing unit, configured to determine that no HARQ feedback is received, where the HARQ feedback includes a HARQ feedback of the sidelink control information or SL data scheduled by using the sidelink control information; where the transceiver unit is further configured to send first information to the second communication device, where the first information indicates that the first communication device receives no HARQ feedback.

According to a fourteenth aspect, a sidelink communication apparatus is provided. The communication apparatus may be a second communication device, or may be a chip in the second communication device. The apparatus has a function of implementing the foregoing fourth aspect. The function may be implemented by hardware, or may be implemented by hardware executing corresponding software. The hardware or software includes one or more modules or units corresponding to the foregoing function. For example, in a possible implementation, the apparatus includes: a transceiver unit, configured to receive sidelink control information from a first communication device; where the transceiver unit is further configured to send a HARQ feedback to the first communication device, where the HARQ feedback includes a HARQ feedback of the sidelink control information or SL data scheduled by using the sidelink control information; and the transceiver unit is further configured to receive first indication information from the first communication device, where the first indication information indicates that the first communication device receives no HARQ feedback.

In a possible implementation, the apparatus further includes: a processing unit, configured to: after the HARQ feedback is sent, start a fifth timer, where the second communication device is in an active time during running of the fifth timer.

In a possible implementation, the failing to receive the HARQ feedback includes: failing to receive the HARQ feedback due to a sending and receiving conflict or prioritization (prioritization).

In a possible implementation, the processing unit is further configured to: when or after the HARQ feedback is sent, start a first timer; or start the first timer in a first time unit after the HARQ feedback is sent.

In a possible implementation, the processing unit is further configured to: when the first timer expires, start a second timer.

According to a fifteenth aspect, a sidelink communication apparatus is provided. The communication apparatus may be a first communication device, or may be a chip in the first communication device. The apparatus has a function of implementing the foregoing fifth aspect. The function may be implemented by hardware, or may be implemented by hardware executing corresponding software. The hardware or software includes one or more modules or units corresponding to the foregoing function. For example, in a possible implementation, the apparatus includes: a transceiver unit, configured to send sidelink control information to a second communication device; and a processing unit, configured to determine that no HARQ feedback is received, where the HARQ feedback includes a HARQ feedback of the sidelink control information or SL data scheduled by using the sidelink control information; where the transceiver unit is further configured to send second information or a NACK and the second information to a third communication device; where the second information indicates that the first communication device receives no HARQ feedback, or the second information indicates that the third communication device does not schedule, during running of the second timer of the HARQ process corresponding to the NACK, SL new transmission or retransmission of another HARQ process used for the SL, and the second timer is used to indicate a maximum duration required for receiving the resource configuration information or the grant information for the SL retransmission.

According to a sixteenth aspect, a sidelink communication apparatus is provided. The communication apparatus may be a third communication device, or may be a chip in the third communication device. The apparatus has a function of implementing the foregoing sixth aspect. The function may be implemented by hardware, or may be implemented by hardware executing corresponding software. The hardware or software includes one or more modules or units corresponding to the foregoing function. For example, in a possible implementation, the apparatus includes: a transceiver unit, configured to receive second information or a NACK and the second information from a first communication device; where the second information indicates that the first communication device receives no HARQ feedback, or the second information indicates that the third communication device does not schedule, during running of the second timer of the HARQ process corresponding to the NACK, SL new transmission or retransmission of another HARQ process used for the SL, and the second timer is used to indicate a maximum duration required for receiving the resource configuration information or the grant information for the SL retransmission; and a processing unit, configured to: during running of the second timer of the HARQ process corresponding to the NACK, not to schedule SL new transmission or retransmission of another HARQ process used for the SL.

According to a seventeenth aspect, a sidelink communication apparatus is provided. The communication apparatus may be a first communication device, or may be a chip in the first communication device. The apparatus has a function of implementing the foregoing seventh aspect. The function may be implemented by hardware, or may be implemented by hardware executing corresponding software. The hardware or software includes one or more modules or units corresponding to the foregoing function. For example, in a possible implementation, the apparatus includes: a transceiver unit, configured to receive information about a first DRX configuration and/or information about a first interval from a second communication device, where the first DRX configuration is a DRX configuration between the communication device and a third communication device, the first interval is an interval between a first resource and a second resource, the first resource is a resource for the second communication device to send an SL HARQ feedback to the third communication device, and the second resource is a resource for the first communication device to send an SL HARQ feedback to the second communication device; and a processing unit, configured to determine a second DRX configuration based on the information about the first DRX configuration and/or the information about the first interval, where the second DRX configuration is a DRX configuration between the first communication device and the second communication device; where the transceiver unit is further configured to send the information about the first DRX configuration and/or the information about the first interval to the third communication device of the transceiver unit.

In a possible implementation, the first interval includes a minimum value of the interval between the first resource and the second resource.

In a possible implementation, the transceiver unit is further configured to: when the first DRX configuration does not match the second DRX configuration, send first information to the second communication device, where the first information notifies the second communication device that the first DRX configuration does not match the second DRX configuration.

In a possible implementation, the transceiver unit is further configured to send first request information to the second communication device, where the first request information is used to request the second communication device to send the information about the first DRX configuration and/or the information about the first interval to the first communication device.

In a possible implementation, the first DRX configuration includes a configuration of a third timer and a configuration of a fourth timer, and the second DRX configuration includes a configuration of a first timer and a configuration of a second timer; and the first timer and/or the third timer is used to indicate an expected minimum duration before resource configuration information or grant information for SL retransmission arrives, and the second timer and/or the fourth timer is used to indicate a maximum duration required for receiving the resource configuration information or the grant information for the SL retransmission.

According to an eighteenth aspect, a sidelink communication apparatus is provided. The communication apparatus may be a second communication device, or may be a chip in the second communication device. The apparatus has a function of implementing the foregoing eighth aspect. The function may be implemented by hardware, or may be implemented by hardware executing corresponding software. The hardware or software includes one or more modules or units corresponding to the foregoing function. For example, in a possible implementation, the apparatus includes: a processing unit, configured to determine information about a first DRX configuration and/or information about a first interval, where the first DRX configuration is a DRX configuration between a second communication device and a third communication device, the first interval is an interval between a first resource and a second resource, the first resource is a resource for the second communication device to send an SL HARQ feedback to the third communication device, and the second resource is a resource for a first communication device to send the SL HARQ feedback to the second communication device; and a transceiver unit, configured to send the information about the first DRX configuration and/or the information about the first interval to the first communication device.

In a possible implementation, the first interval includes a minimum value of the interval between the first resource and the second resource.

In a possible implementation, the transceiver unit is further configured to: receive first information from the first communication device, where the first information notifies the second communication device that the first DRX configuration does not match a second DRX configuration, the second DRX configuration is DRX between the first communication device and the second communication device, and the second DRX configuration is used for SL communication between the first communication device and the second communication device, or the second DRX configuration is used for the first communication device to receive information sent by the second communication device.

According to a nineteenth aspect, a sidelink communication apparatus is provided. The communication apparatus may be a first communication device, or may be a chip in the first communication device. The apparatus has a function of implementing the foregoing ninth aspect. The function may be implemented by hardware, or may be implemented by hardware executing corresponding software. The hardware or software includes one or more modules or units corresponding to the foregoing function. For example, in a possible implementation, the apparatus includes: a transceiver unit, configured to receive carried second information from a third communication device, where the second information indicates whether an SL HARQ feedback resource exists, and the SL HARQ feedback resource is used by the first communication device to send an SL HARQ feedback to the third communication device; and a processing unit, configured to send third information to a second communication device based on the second information, where the third information notifies whether to start, on a second DRX, a first timer and/or a second timer of a corresponding SL process, or the third information indicates whether the SL HARQ feedback resource exists; and/or the processing unit is further configured to: based on the second information, determine whether to start, on a first DRX, a third timer and/or a fourth timer of a corresponding SL process and/or determine whether to start, on the second DRX, the first timer and/or the second timer of the corresponding SL process.

In a possible implementation, that the second information indicates whether an SL HARQ feedback resource exists includes: the second information indicates whether the SL HARQ feedback resource exists in a first SL process or a first SL transport block TB or does not exist.

According to a twentieth aspect, a sidelink communication apparatus is provided. The communication apparatus may be a second communication device, or may be a chip in the second communication device. The apparatus has a function of implementing the foregoing tenth aspect. The function may be implemented by hardware, or may be implemented by hardware executing corresponding software. The hardware or software includes one or more modules or units corresponding to the foregoing function. For example, in a possible implementation, the apparatus includes: a transceiver unit, configured to receive third information from a first communication device, where the third information notifies whether to start, on a second DRX, a first timer and/or a second timer of a corresponding SL process, or the third information indicates whether an SL HARQ feedback resource exists; and a processing unit, configured to determine, based on the third information, whether to start, on the second DRX, the first timer and/or the second timer of the corresponding SL process, where the second DRX is DRX between the first communication device and the second communication device, the first timer is used to indicate an expected minimum duration before resource configuration information or grant information for SL retransmission arrives, and the second timer is used to indicate a maximum duration required for receiving the resource configuration information or the grant information for the SL retransmission.

According to a twenty-first aspect, embodiments of this application provide a communication apparatus, including a processor and a memory, where the memory is configured to store a computer execution command, and when the apparatus runs, the processor executes the computer execution command stored in the memory, so that the apparatus performs functions of implementing methods in the foregoing first aspect to the tenth aspect.

According to a twenty-second aspect, embodiments of this application provide a communication apparatus, including units or means (means) configured to perform steps of implementing methods of the foregoing first aspect to the tenth aspect.

According to a twenty-third aspect, embodiments of this application provide a communication apparatus, including a processor and an interface circuit. The processor is configured to communicate with another apparatus through the interface circuit, and perform implementing methods of the foregoing first aspect to the tenth aspect. There are one or more processors.

According to a twenty-fourth aspect, embodiments of this application provide a communication apparatus, including a processor. The processor is connected to a memory, and configured to invoke a program stored in the memory to perform implementing methods of the foregoing first aspect to the tenth aspect. The memory may be located inside or outside the apparatus. There are one or more processors.

According to a twenty-fifth aspect, embodiments of this application further provide a computer-readable storage medium. The computer-readable storage medium stores an instruction. When the instruction is run on a computer, implementing methods of the foregoing first aspect to the tenth aspect are performed.

According to a twenty-sixth aspect, embodiments of this application further provide a computer program product. The computer product includes a computer program. When the computer program is run, implementing methods of the foregoing first aspect to the tenth aspect are performed.

According to a twenty-seventh aspect, embodiments of this application further provide a chip system, including: a processor, configured to perform implementing methods of the first aspect to the tenth aspect.

According to a twenty-eighth aspect, embodiments of this application further provide a communication system, including a first communication device configured to perform any one of the foregoing aspects and a second communication device configured to perform any one of the foregoing aspects. Optionally, the third communication device according to any one of the foregoing aspects may be further included.

### BRIEF DESCRIPTION OF DRAWINGS

FIG. 1 is a schematic diagram of a communication system according to an embodiment of this application;
FIG. 2A is a schematic diagram of a DRX cycle according to an embodiment of this application;
FIG. 2B is a schematic diagram of a scenario according to Embodiment 1 of this application;
FIG. 2C is a flowchart of a sidelink communication method according to Embodiment 1 of this application;
FIG. 3 is a flowchart of a sidelink communication method according to Embodiment 1 of this application;
FIG. 4 is a schematic diagram of a scenario according to Embodiment 2 of this application;
FIG. 5 is a flowchart of a sidelink communication method according to Embodiment 2 of this application;
FIG. 6 is a flowchart of a sidelink communication method according to Embodiment 3 of this application;
FIG. 7 is a schematic diagram of a scenario according to Embodiment 3 of this application;
FIG. 8 is a flowchart of a sidelink communication method according to Embodiment 4 of this application;
FIG. 9 is a flowchart of a sidelink communication method according to Embodiment 5 of this application;
FIG. 10 is a schematic diagram of a scenario according to Embodiment 5 of this application;
FIG. 11 is a schematic structural diagram of an apparatus according to an embodiment of this application; and
FIG. 12 is another schematic structural diagram of an apparatus according to an embodiment of this application.

### DESCRIPTION OF EMBODIMENTS

The following describes technical solutions in embodiments of this application with reference to accompanying drawings.

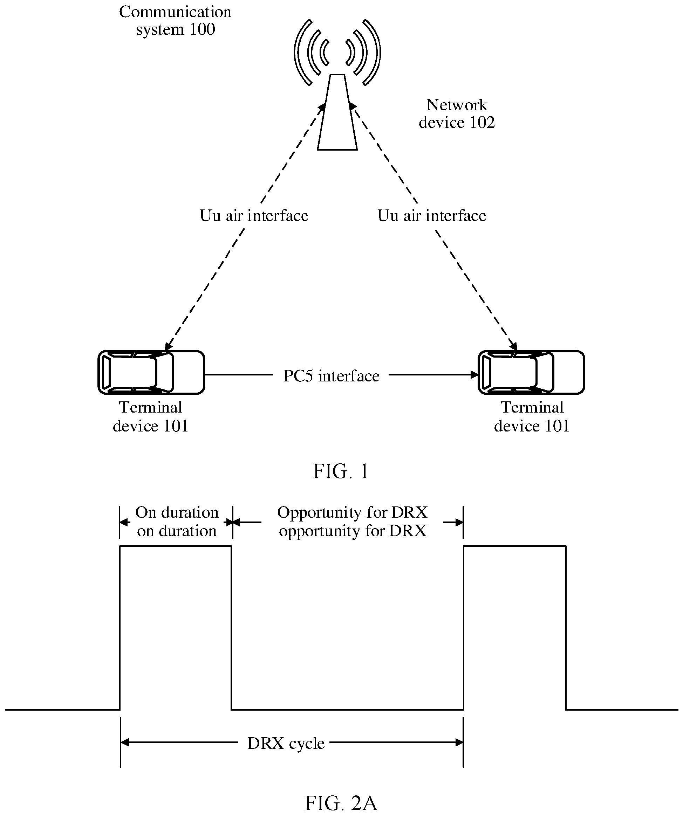

FIG. 1 shows a communication system 100 to which an embodiment of this application can be applied. The communication system 100 may be a long term evolution (long term evolution, LTE) system, a fifth generation (5^{th} generation, 5G) communication system, a new radio (new radio, NR) communication system, or may be a machine to machine (machine to machine, M2M) communication system, an Internet of Vehicles communication system, a device to device (device to device, D2D) communication system, a sixth generation communication system and a future evolved communication system, and the like.

As shown in FIG. 1, the communication system 100 may include: two or more terminal devices 101. The terminal device 101 may communicate with the terminal device 101 through a wireless interface (for example, a PCS interface). On the PCS interface, a link for transmitting data between the terminal device 101 and the terminal device 101 may be referred to as an SL.

SL communication is generally used in a scenario of direct communication between devices such as vehicle to everything (vehicle to everything, V2X) or D2D. V2X refers to connecting vehicles to a network, and includes 4 different types of applications, namely, vehicle to vehicle (vehicle to vehicle, V2V), vehicle to infrastructure (vehicle to infrastructure, V2I), vehicle to network (vehicle to network, V2N), vehicle to pedestrian (vehicle to pedestrian, V2P), and the like. Through these 4 applications, vehicles, roadside infrastructure, application servers, and pedestrians can collect, process, and share status information about surrounding vehicles and environments to provide more intelligent services, such as unmanned driving (unmanned driving), autonomous driving (automated driving), driver assistance (driver assistance), intelligent driving (intelligent driving), connected driving (connected driving), intelligent network driving (intelligent network driving), and car sharing (car sharing), or the like.

As shown in FIG. 1, the terminal device 101 in a V2V scenario may be a vehicle-mounted terminal. On the PCS interface, the vehicle-mounted terminal and the vehicle-mounted terminal may exchange data through the SL, for example, data indicating vehicle dynamics, such as a vehicle location, a vehicle speed, and a driving direction. For example, the vehicle-mounted terminal A may send SL data to another vehicle-mounted terminal B through the SL, where the SL data indicates content expressed by the foregoing data. For example, content displayed in a user interface of the vehicle-mounted terminal B may be "a license plate number ("FAF787") of the rear vehicle A", a driving operation being performed by the rear vehicle A ("Rear vehicle FAF787 is performing overtaking operation"), and a current speed of the rear vehicle A ("80 km/h"), and the like. In this way, an incidence of traffic accidents can be reduced and driving safety can be enhanced.

Optionally, the communication system 100 shown in FIG. 1 may further include a network device 102. A communication interface between the network device 102 and the terminal device 101 is a Uu air interface. The network device 102 may communicate with the terminal device 101 through a Uu air interface under control of a network device controller (not shown), such as a base station controller (base station controller, BSC).

Currently, a main resource allocation manner of SL communication is a resource allocation manner based on network device (for example, a base station) scheduling. In this SL resource allocation manner, the base station delivers downlink control information (downlink control information, DCI) on a PDCCH to dynamically allocate a resource, and transmit user equipment (transmit user equipment, TX UE) needs to monitor the PDCCH to obtain an SL grant (grant) delivered by the base station.

On the Uu air interface, to reduce power consumption caused by keeping monitoring the PDCCH by the UE, a solution currently used by the 3GPP is a discontinuous reception (discontinuous reception, DRX) mechanism. The following describes a current DRX mechanism.

### (1) Basic working principles of the DRX mechanism

As shown in FIG. 2A, in a DRX mechanism in an LTE or NR system, a network device configures a DRX cycle (DRX cycle) for UE in a radio resource control (radio control resource, RRC) connected state. The DRX cycle includes two periods: "On Duration" and "Opportunity for DRX". "On Duration" may be referred to as a duration, and "Opportunity for DRX" may be referred to as a DRX opportunity. During "On Duration", the UE monitors and receives the PDCCH. During "Opportunity for DRX", the UE does not monitor the PDCCH to reduce power consumption. The value of "On Duration" (for example, 10 ms) specifies a time during which the UE needs to monitor the PDCCH from a start location of the DRX cycle. "On Duration" can be greater than 1 ms or less than 1 ms. During "On Duration", the UE is in a wakeup state, that is, the UE monitors the PDCCH. During "Opportunity for DRX", the UE is in a sleep state, that is, the UE does not monitor the PDCCH. Herein, the sleep state is only for monitoring the PDCCH, and indicates that the UE does not monitor the PDCCH. The UE in the sleep state is still in a RRC connected state, and on the Uu air interface, can transmit uplink data through a physical uplink control channel (physical uplink control channel, PUCCH), a physical uplink shared channel (physical uplink shared channel, PUSCH), or the like to or receive, through a physical downlink shared channel (physical downlink shared channel, PDSCH), downlink data sent by a base station, and can further transmit SL data on the PCS interface through a physical sidelink shared channel (physical sidelink shared channel, PSSCH), a physical sidelink control channel (physical sidelink control channel, PSCCH), or the like.

### (2) A round trip time (round trip time, RTT) timer and a retransmission timer are introduced.

In an NR system, if a base station configures a retransmission mechanism of SL-based hybrid automatic repeat request (hybrid automatic repeat request, HARQ) feedback for TX UE, a possible HARQ working manner for a resource allocation manner based on base station scheduling is: The base station schedules a retransmission resource for the TX UE based on HARQ feedback (feedback) of SL data transmission. The HARQ feedback may be a negative acknowledgment (negative acknowledgment, NACK) or an acknowledgment (acknowledgment, ACK). For example, if the HARQ feedback of data a is a NACK, after receiving the NACK, the base station schedules a resource for retransmission of the data a, and delivers, on a PDCCH, an SL grant (grant) used for retransmission of the data a.

When the HARQ acknowledgment of the data a sent by the Tx UE to the base station is a NACK, the Tx UE subsequently needs to receive a PDCCH delivered by the base station and used to schedule retransmission of the data a, so as to perform the retransmission of the data. However, according to the current DRX mechanism, when the base station delivers the PDCCH, the TX UE may have entered an "opportunity for DRX" state, and no longer monitors the PDCCH. Only after "On Duration" of a next DRX cycle, the TX UE monitors the PDCCH, receives the PDCCH delivered by the base station for scheduling the retransmission of the data a, and then perform the retransmission of the data a. As a result, data retransmission of the TX UE on the SL is delayed, and a quality of service (quality of service, QoS) requirement of a service transmitted on the SL cannot be met.

Based on the foregoing description, to reduce a transmission delay of SL data, the following timer is introduced: an RTT timer and a retransmission timer. For example, when sending the HARQ feedback to the base station over a PUCCH resource, the TX UE starts the RTT timer. When the RTT timer expires and the TX UE fails to decode data, that is, the sent HARQ feedback is a NACK, the retransmission timer is started. The TX UE monitors the PDCCH during running of the retransmission timer, thereby avoiding that the TX UE can monitor the PDCCH only during the "on duration" in the next DRX cycle, thereby reducing the transmission delay of SL data.

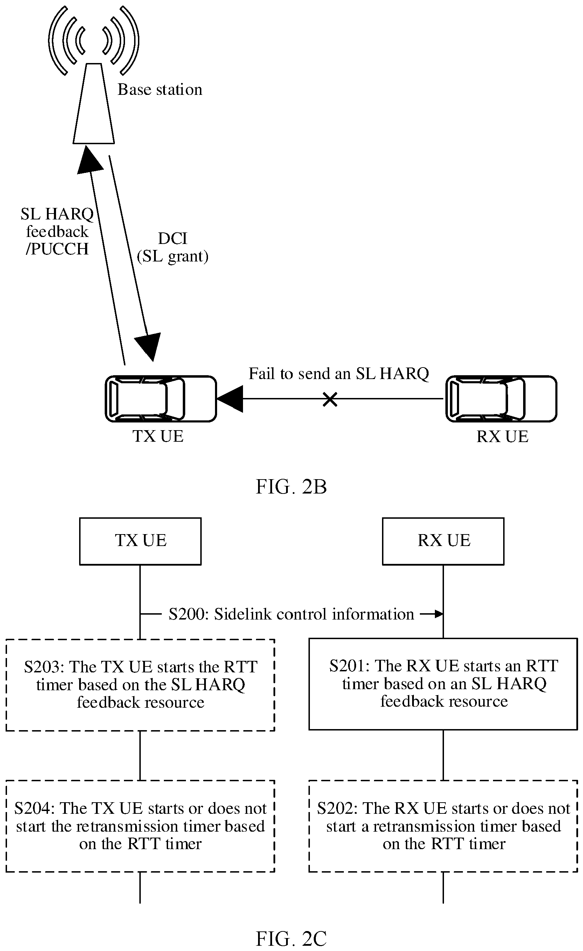

In the foregoing description, a DRX mechanism between the base station and the TX UE is described, and the DRX may be referred to as Uu DRX. It can be learned that in the Uu DRX, when the TX UE sends the HARQ feedback to the base station, the RTT timer is started. In addition, the retransmission timer is started only when the RTT timer expires and data decoding fails. Currently, an SL DRX mechanism is proposed between TX UE and receive user equipment (receive user equipment, RX UE). The RTT timer and a retransmission timer also exist in SLDRX. There is no clear solution in the industry about how to start the RTT timer and the retransmission timer between the TX UE and the RX UE. For example, in SL DRX, the foregoing solution of starting the RTT timer and the retransmission timer in Uu DRX is still used. In a possible design, in SL DRX, the RX UE may start the RTT timer when sending the HARQ feedback. When the RTT timer expires and when the RX UE fails to decode data, the RX UE can start the retransmission timer. In this design, the following problems exist. As shown in FIG. 2B, in a scenario, if the RX UE fails to send the HARQ feedback, the TX UE feeds back a NACK to the base station. When receiving the foregoing NACK, the base station reallocates an SL retransmission resource, and indicates the SL retransmission resource to the TX UE by using DCI. Subsequently, the TX UE retransmits SL data to the RX UE based on the allocated SL retransmission resource. However, it can be learned from the foregoing analysis that because the RX UE fails to send the HARQ feedback, if the foregoing Uu DRX design is still used, the RX UE fails to start the RTT timer and the retransmission timer, and the RX UE may be in a sleep state. Therefore, the RX UE cannot receive the SL data retransmitted by the TX UE, causing a packet loss on the RX UE side.
1. Based on the foregoing problem, this embodiment of this application provides a solution. In this solution, a condition for starting an RTT timer and a retransmission timer by RX UE is modified without depending on a case that the RTT timer and the retransmission timer is started after the HARQ is successfully sent. The method specifically includes: When receiving the SCI sent by the TX UE, the RX UE starts the RTT timer based on a resource used for transmitting an SL HARQ feedback, for example, a PSFCH resource. The RX UE starts the retransmission timer based on the RTT timer. Therefore, when the RX UE fails to send the HARQ feedback, the retransmission timer may also be started, so that the RX UE may be in a wakeup state, thereby avoiding a packet loss on the RX UE side. For specific descriptions of this solution, refer to the following Embodiment 1.
2. In addition, this embodiment of this application further provides the following solution. After the RX UE successfully sends the HARQ feedback, when the TX UE receives no HARQ feedback due to a sending and receiving conflict or prioritization of the TX UE, a packet loss problem may also occur. For example, if the TX UE receives no HARQ feedback due to the sending and receiving conflict or prioritization, the TX UE sends a NACK to the base station, and the base station reallocates an SL resource for SL transmission between the TX UE and the RX UE. Then, the TX UE sends the SL data to the RX UE based on the allocated SL resource. According to the foregoing analysis, if the Uu DRX design is still used, the RX UE starts the RTT timer when sending a HARQ. When the RTT timer expires and the sent HARQ feedback is a NACK, the RX UE starts the retransmission timer. If the HARQ feedback sent by the RX UE indicates an ACK, the RX UE does not start the retransmission timer. However, when the RX UE sends an ACK, because the TX UE receives no ACK, the TX UE also sends a NACK to the base station. Therefore, the base station considers that the RX UE starts a retransmission timer corresponding to an SL process in a subsequent period of time. Therefore, an SL retransmission resource or a new transmission resource is allocated to the TX UE. In this way, the TX UE sends retransmission or new transmission SL data to the RX UE within a running time of the retransmission timer. When the RX UE sends the ACK, the RX UE does not start the retransmission timer, causing a packet loss on the RX UE. Based on the foregoing problem, this embodiment of this application provides a solution. In this solution, when determining that the TX UE receives no HARQ feedback of the RX UE due to a sending and receiving conflict or prioritization of the TX UE, the TX UE may send, to the RX UE, a first indication used to indicate that the TX UE receives no HARQ feedback. Subsequently, the RX UE may start the retransmission timer regardless of whether the sent HARQ feedback is an ACK or a NACK, so as to avoid a packet loss on the RX UE. For specific descriptions of this solution, refer to the following Embodiment 2.
3. This embodiment of this application further provides the following solution. This solution is mainly used when the TX UE receives no HARQ feedback of the RX UE, and a reason for not receiving the HARQ feedback is not caused by a sending and receiving conflict or prioritization of the TX UE. The TX UE may send indication information to the base station, to instruct the base station to schedule only a retransmission resource of a corresponding HARQ process during a subsequent running period of the retransmission timer, and not to perform retransmission or new transmission of another HARQ process. For specific description and effect analysis of the solution, refer to the following Embodiment 3. Notes: The method in Embodiment 2 and Embodiment 3 of the present invention is applicable regardless of whether the TX UE receives no HARQ feedback of the RX UE due to a reason such as a sending and receiving conflict or prioritization of the TX UE or due to other reasons.
4. This embodiment of this application further provides the following solution, which is mainly used for a problem that a packet loss may be caused when the Uu RX does not match the SL DRX. The TX UE may send information about a Uu DRX configuration and information about a first interval to the RX UE. The RX UE determines an SL DRX configuration based on the information about a Uu DRX configuration and the information about the first interval. When the SL DRX configuration does not match Uu DRX configuration, the RX UE may send notification information to the TX UE, so that the RX UE notifies the base station corresponding to the TX UE of adjusting the Uu DRX configuration and/or the first interval, and the like. For specific descriptions of this embodiment, refer to the following Embodiment 4.
5. This embodiment of this application further provides the following solution, which is mainly used when the base station does not indicate an SL HARQ feedback resource for a HARQ process used for an SL, neither the TX UE nor the base station starts, on the Uu DRX, the RTT timer and the retransmission timer corresponding to the HARQ process. However, the RX UE does not know the preceding situation. The RX UE may still start the RTT timer and the retransmission timer of the corresponding SL process, resulting in a waste of power consumption of the RX UE. In the solution of this embodiment of this application, the TX UE may send indication information about whether there is an SL HARQ feedback resource to the RX UE, and the RX UE starts or does not start the RTT timer and the retransmission timer based on the indication information; or the TX UE may send indication information about whether a HARQ process used for SL has an SL HARQ feedback resource to the RX UE, and the RX UE starts or does not start the RTT timer and the retransmission timer of a corresponding SL process based on the indication information. Therefore, a waste of power consumption of the RX UE can be avoided. For details about this embodiment, refer to the description in the following Embodiment 5.

Notes: The communication system 100 shown in FIG. 1 is merely intended to clearly describe the technical solutions of this application, but does not constitute a limitation on this application. A person of ordinary skill in the art may learn that the technical solutions provided in embodiments of this application are also applicable to a similar technical problem as a network architecture evolves and a new service scenario emerges.

For ease of understanding, a noun or term used in embodiments of this application is first described. The noun or term is also used as a part of the invention content of embodiments of this application.

### 1. Communication device.

The communication device in embodiments of this application may be a terminal device, a network device, or the like. For example, in the description of embodiments of this application, the first communication device and the second communication device may be terminal devices. The following describes a concept of a terminal device:

The terminal device may be referred to as a terminal for short, and is a device with a wireless transceiver function. The terminal device may be deployed on land, including an indoor or outdoor, a handheld or vehicle-mounted device. It can also be deployed on water (for example, on a ship). It can also be deployed in the air (for example, on an aircraft, a balloon, or a satellite). The terminal device may be a mobile phone (mobile phone), a tablet computer (pad), a computer with a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in telemedicine (remote medical), a wireless terminal device in smart grid (smart grid), a wireless terminal device in transportation safety (transportation safety), a wireless terminal device in a smart city (smart city), a wireless terminal device in the Internet of Vehicles, and a wireless terminal device in a smart home (smart home), and may further include user equipment (user equipment, UE), and the like. The terminal device may also be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, or another processing device connected to a wireless modem, a vehicle-mounted device, a wearable device, a terminal device in a fifth generation (5^{th} generation, 5G) or a future evolved network, or the like. The terminal device may also be referred to as a terminal, an access terminal device, a vehicle-mounted terminal device, an industrial control terminal device, a UE unit, a UE station, a mobile station,, a remote station, a remote terminal device, a mobile device, a UE terminal device, a terminal device, a wireless communication device, a UE agent, or UE apparatus, or the like. The terminal device may also be fixed or mobile. Embodiments of this application are not limited thereto.

For example, in the description of this application, the third communication device may be a network device. The following describes a concept of a network device.

The network device may be an access network device. The access network device may also be referred to as a radio access network (radio access network, RAN) device, and is a device that provides a wireless communication function for a terminal device. For example, the access network device includes but is not limited to: a next generation NodeB (generation NodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB, or home NodeB, HNB), a baseband unit (baseband unit, BBU), a transmitting and receiving point (transmitting and receiving point, TRP), a transmitting point (transmitting point, TP), a mobile switching center, and the like. The access network device may also be a radio controller, a central unit (central unit, CU), and/or a distributed unit (distributed unit, DU) in a cloud radio access network (cloud radio access network, CRAN) scenario, or the network device may be a relay station, an access point, a vehicle device, a wearable device, and a network device in a 5G network, or a future evolved network, or the like. The terminal device may communicate with a plurality of access network devices of different technologies. For example, the terminal device may communicate with an access network device that supports long term evolution (long term evolution, LTE), or may communicate with an access network device that supports 5G, and may also perform dual connection with the access network device that supports LTE and the access network device that supports 5G. Embodiments of this application are not limited thereto.

### 2. Sidelink (sidelink, SL)

The sidelink is used for communication between terminal devices, and a communication interface between the terminal devices is a PCS interface. Channels used in sidelink communication may include a physical sidelink shared channel (physical sidelink shared channel, PSSCH), a physical sidelink control channel (physical sidelink control channel, PSCCH) and a physical sidelink feedback channel (physical sidelink feedback channel, PSFCH).

The PSSCH is used to carry sidelink data (SL data), and the PSCCH is used to carry sidelink control information (sidelink control information, SCI). The SCI may also be referred to as a sidelink scheduling assignment (sidelink scheduling assignment, SL SA). The SL SA is information for relevant data scheduling, for example, information used to carry a resource configuration and/or a modulation and coding scheme (modulation and coding scheme, MCS) of a PSSCH. The PSFCH may be used for transmitting sidelink feedback control information (sidelink feedback control information, SFCI). The sidelink feedback control information may include information such as channel state information (channel state information, CSI) and HARQ. The HARQ information may be specifically a negative acknowledgment (negative acknowledgment, NACK) or an acknowledgment (acknowledgment, ACK).

### 3. First timer and second timer.

A first timer and a second timer may be timers associated with SL DRX. The first timer may be referred to as sl-drx-HARQ-RTT-Timer, and the second timer may be referred to as sl-drx-RetransmissionTimer.

The first timer is used to indicate an expected minimum duration before resource configuration information or grant information for SL retransmission arrives, that is, a value of the first timer may be "minimum duration before resource configuration information or grant information for SL retransmission arrives". Alternatively, the first timer is used to indicate an expected minimum duration before the resource configuration information or the grant information for SL retransmission arrives at a receiving end, that is, a value of the first timer may be "minimum duration before the resource configuration information or the grant information for SL retransmission arrives at a receiving end". The second timer is used to indicate a maximum duration required for receiving the resource configuration information or the grant information for the SL retransmission, that is, a value of the second timer may be "maximum duration until the resource configuration information or the grant information for the SL retransmission is received". Alternatively, the second timer is used to indicate a maximum duration required by a receiving end to receive the resource configuration information or the grant information for the SL retransmission, that is, a value of the second timer may be "maximum duration until the receiving end receives the resource configuration information or the grant information for the SL retransmission".

### 4. Third timer and fourth timer.

A third timer and a fourth timer may be timers associated with Uu DRX. The third timer may be referred to as drx-HARQ-RTT-TimerSL, and the fourth timer may be referred to as drx-RetransmissionTimerSL.

The third timer is used to indicate an expected minimum duration before resource configuration information or grant information for SL retransmission arrives, that is, a value of the third timer may be "minimum duration before resource configuration information or grant information for SL retransmission arrives". Alternatively, the third timer is used to indicate an expected minimum duration before the resource configuration information or the grant information for SL retransmission arrives at a receiving end, that is, a value of the third timer may be "minimum duration before the resource configuration information or the grant information for SL retransmission arrives at a receiving end". The fourth timer is used to indicate a maximum duration required for receiving the resource configuration information or the grant information for the SL retransmission, that is, a value of the fourth timer may be "maximum duration until the resource configuration information or the grant information for the SL retransmission is received". Alternatively, the fourth timer is used to indicate a maximum duration required by a receiving end to receive the resource configuration information or the grant information for the SL retransmission, that is, a value of the fourth timer may be "maximum duration until the receiving end receives the resource configuration information or the grant information for the SL retransmission".

### 5. Time unit.

A time unit is a time-domain unit used for data transmission, and may include time-domain units such as a radio frame (radio frame), a subframe (subframe), a slot (slot), a mini-slot (mini-slot), and a time-domain symbol (symbol). In 5G new radio (new radio, NR), one radio frame may include 10 subframes, and one subframe may include one or more timeslots. Specifically, a quantity of timeslots included in a subframe is related to a sub-carrier space.

There may be different slot lengths for different sub-carrier spaces. For example, when the sub-carrier space is 15 kHz, one slot is 1 millisecond (millisecond, ms). When the sub-carrier space is 30 kHz, one slot is 0.5 ms. Amini-slot, also referred to as a mini-slot, may be a unit smaller than a slot, and one mini-slot may include one or more symbols. For example, one mini-slot may include 2 symbols, 4 symbols, or 7 symbols. One slot may include one or more mini-slots.

A sub-carrier space of 15 kHz is used as an example. One radio frame may last 10 ms, each subframe may last 1 ms, one radio frame includes 10 subframes, each timeslot lasts 1 ms, each subframe may include one timeslot, and each slot may include 14 symbols. Further, the mini-slot may include 4 symbols, 2 symbols, 7 symbols, or the like.

Notes: In the description of this application, unless otherwise specified, "/" indicates that associated objects are in an "or" relationship. For example, A/B may represent A or B. In this application, "and/or" is merely an association relationship for describing associated objects, and indicates that three relationships may exist. For example, A and/or B may indicate: Only A exists, both A and B exist, and only B exists, where A and B may be singular or plural. In addition, in the description of this application, unless otherwise specified, "a plurality of" means two or more. "At least one of the following items (pieces) or a similar expression thereof" refers to any combination of these items, including any combination of singular items (pieces) or plural items (pieces). For example, at least one of a, b, or c may represent: a, b, c, a-b, a-c, b-c, or a-b-c, where a, b, and c may be one or more. In addition, to clearly describe the technical solutions in embodiments of this application, terms such as "first" and "second" are used to distinguish between same objects or similar objects whose functions and purposes are basically the same. A person skilled in the art may understand that the terms such as "first" and "second" do not limit a quantity or an execution sequence, and the terms such as "first" and "second" do not indicate a definite difference.

This application provides a plurality of SL DRX and Uu DRX alignment methods, which are separately described below by using the following embodiments. Some of these SL DRX and Uu DRX alignment methods are applicable only to some procedures in a process of SL DRX and Uu DRX alignment, and some may be applied to any one or more procedures in a process of SL DRX and Uu DRX alignment. It should be understood that these SL DRX and Uu DRX alignment methods may be used in combination with each other. For example, in a process in which the SL DRX is aligned with the Uu DRX, one method may be used in a procedure and another method may be used in another procedure; or both one method and another method may be used in a procedure in which the SL DRX is aligned with the Uu DRX.

It should be understood that processes of SL DRX and Uu DRX may change with evolution of technical solutions, and technical solutions provided in this application are not limited to the processes described below. Further, the description of the scenario in embodiments of this application is merely an example, and is not limited to that the solutions in embodiments of this application can be used only to describe the scenario, and are also applicable to a scenario in which a similar problem exists.

In addition, in this application, determining prioritization by the communication device may be performed at a physical layer. The physical layer notifies the MAC layer of a prioritization result, so that the MAC layer determines a DRX-related timer (for example, starting an RTT timer and/or a retransmission timer in this embodiment of this application). For example, in a possible implementation, when sending an SL HARQ feedback by the RX UE conflicts with receiving a sent SL HARQ feedback, the physical layer of the RX UE may perform the foregoing prioritization determining process. Then, the physical layer of the RX UE notifies the MAC layer of the prioritization result. For example, the foregoing result may be that the priority of sending the SL HARQ feedback by the RX UE is relatively low, and in this case, the RX UE does not send the SL HARQ feedback.

In the related description of this application, the expression of failing to send the HARQ feedback (does not transmit HARQ feedback successfully) may be replaced with an expression of skipping sending (does not transmit) the HARQ feedback, or failing to send (fail to transmit) the HARQ feedback, or the like. The expression of successfully sending the HARQ may be replaced with an expression of sending the HARQ. The expression of failing to receive the HARQ feedback may be replaced with an expression of skipping receiving the HARQ feedback, failing to receive the HARQ feedback, or the like. The HARQ feedback may also be replaced with a PSFCH or the like. The expression of successfully receiving the HARQ may be replaced with an expression of receiving the HARQ or the like.

### Embodiment 1

Embodiment 1 of this application provides a sidelink communication method. Before the method is described, Embodiment 1 is first described as follows: 1. In the following description, the SL HARQ feedback resource may also be replaced with a PSFCH feedback resource. 2. In the following description, in a case in which a HARQ is not explicitly defined as a NACK or a HARQ is not explicitly defined as an ACK, the foregoing HARQ may be a NACK, an ACK, or the like. 3. Successfully sending the HARQ feedback may be replaced with: Sending the HARQ feedback. Unless otherwise specified, description is not repeated in the following description.

As shown in FIG. 2C, a procedure of a sidelink communication method is provided. In this procedure, for example, a first communication device is RX UE, a second communication device is TX UE, a first timer is an RTT timer, and a second timer is a retransmission timer. The method includes at least the following steps.

Step 200: The RX UE receives sidelink control information from the TX UE. The sidelink control information may be SCI, PSCCH, first-level SCI, second-level SCI, or first-level SCI and second-level SCI, or the like. This is not limited. In the following description, for example, the sidelink control information is SCI.

Step 201: The RX UE starts an RTT timer based on an SL HARQ feedback resource, where the SL HARQ feedback resource is used for transmitting a HARQ feedback of the SCI or SL data scheduled by using the SCI.

In this embodiment of this application, the SL HARQ feedback resource may be a configured resource used for transmitting the HARQ feedback. For example, when the solution in this embodiment of this application is performed, the SL HARQ feedback resource may have been configured for the RX UE. For example, the resource may be configured by the TX UE for the RX UE, or may be configured by the network device for the RX UE. This is not limited. This SL HARQ feedback resource may also be referred to as a PSFCH resource or the like. This SL HARQ feedback resource may include one or more time units. For a description of the time unit, refer to the description in the foregoing term explanation part. Details are not described again. In this embodiment of this application, when the RX UE receives the SCI sent by the TX UE, the SCI may be used as a trigger condition to trigger the RX UE to start the RTT timer. A specific time for starting the RTT timer may be determined based on the foregoing configured SL HARQ feedback resource. For example, when the RX UE receives the SCI, the RX UE may start the RTT timer in any one of the plurality of time units. For example, the RX UE may start the RTT timer in a first time unit of the plurality of time units, that is, the RX UE starts the RTT timer in a first time unit included in the SL HARQ feedback resource. Alternatively, when the RX UE receives the SCI, the RX UE may start the RTT timer after the SL HARQ feedback resource. The RX UE may start the RTT timer in any time unit after the SL HARQ feedback resource. This is not limited. For example, the RX UE may start the RTT timer in the first time unit after the SL HARQ feedback resource.

It can be learned from the foregoing description that when the RX UE receives the SCI, the RX UE may start the RTT timer in the first time unit in the SL HARQ feedback resource, or in the first time unit after the SL HARQ feedback resource. For example, the SL HARQ feedback resource is configured. Therefore, the RX UE may start the RTT timer in a first time unit in the configured SL HARQ feedback resource, or in a first time unit after a configured SL HARQ feedback resource.

Notes: When the RX UE starts the RTT timer, and the retransmission timer is running, the RX UE may further stop the running retransmission timer and the like, so as to subsequently start the retransmission timer based on the RTT timer. In this way, the RTT timer and the retransmission timer between the TX UE and the RX UE are synchronized.

Optionally, step 202: The RX UE starts or does not start the retransmission timer based on the RTT timer. Whether the RX UE starts the retransmission timer based on the RTT timer is described as follows: The TX UE can determine whether the RTT timer expires. If the RTT timer does not expire, the retransmission timer is not started. When the RTT timer expires, the RX UE can start the retransmission timer. Alternatively, when the RTT timer expires, the retransmission timer can be started only when another condition is further met. For details, refer to the following description.

In a possible implementation, when the RTT timer expires, the RX UE may start the retransmission timer. That is, when the RTT timer expires, the retransmission timer is started regardless of whether the SCI or SL data scheduled by using the SCI is successfully decoded. In the description of this application, unless otherwise specified, whether decoding on the RX UE side is successful usually refers to whether the RX UE successfully decodes the SCI or SL data scheduled by using the SCI, or the like. Alternatively, in another possible implementation, when the RTT timer expires, the RX UE may determine whether a preset condition is met, and the RX UE starts the retransmission timer only when the preset condition is met. The foregoing preset condition may be that the RX UE fails to perform decoding, or the RX UE fails to send an SL HARQ feedback, or the like. The preset condition is described in detail in the following embodiments.

It can be learned from the foregoing description that, in this embodiment of this application, when the RX UE receives the SCI, the SCI may be used as a trigger condition, and the RX UE starts the RTT timer based on the time unit included in the configured SL HARQ feedback resource. When the RTT timer expires, the RX UE starts the retransmission timer. Alternatively, when the RTT timer expires and a preset condition is met, the RX UE starts the retransmission timer.

Notes: The foregoing SCI is used as a trigger condition for starting the RTT timer. In a possible embodiment, in addition to triggering of the SCI, the RX UE may further need to meet another condition to start the RTT timer. For example, the foregoing other conditions may include a case that the TX UE fails to send the HARQ feedback. That is, in Example 1:

When the RX UE receives the SCI, the RX UE may send a HARQ feedback of the SCI or SL data scheduled by using the SCI. Then, the RX UE determines whether the HARQ is successfully sent. If the RX UE fails to send the HARQ feedback, the RX UE may start the RTT timer in a first time unit included in an SL HARQ feedback resource used to send the HARQ feedback. Alternatively, the RX UE may start the RTT timer in a first time unit after the SL HARQ feedback resource used to send the HARQ feedback. When the RTT timer expires, the RX starts the retransmission timer. Optionally, a case in which when the RX UE successfully sends the HARQ feedback, whether the solution in this embodiment of this application is still used to start the RTT timer is not limited. For example, in a possible implementation, if the RX UE successfully sends the HARQ feedback, the RTT timer is started by using a Uu DRX configuration, that is, the RTT timer is started in a first symbol after the HARQ feedback is sent.

In this embodiment of this application, a reason why the RX UE fails to send the HARQ feedback may include a reason such as prioritization (prioritization) or a conflict of the RX UE why the RX UE fails to send the HARQ feedback. The following is an explanation of prioritization: Prioritize and select the higher priority. Specifically, As discussed in the present invention, prioritization may be further understood as: When the RX UE needs to send two or more pieces of information at the same time (optionally, the foregoing information may be replaced with signals or signaling.), or when the RX UE needs to perform receiving and sending at the same time, or when the RX UE needs to perform sending on two or more physical channels at the same time, or when the RX UE needs to perform one transmission and one reception on two physical channels at the same time, the priorities of the information or channels are determined, the information or channel with the highest priority is selected for sending or receiving, and other information or channels are not sent or received. For the foregoing example 1, a specific implementation may be the following: When the RX UE receives the SCI, the RX UE may send a HARQ feedback of the SCI or SL data scheduled by using the SCI. If the RX UE finds that the RX UE fails to send the HARQ feedback due to prioritization or a low priority of a conflict, the RX UE may start the RTT timer and stop the retransmission timer in a first symbol included in the SL HARQ feedback resource, or a first symbol after the SL HARQ feedback resource. When the RTT timer expires, the RX UE starts the retransmission timer regardless of whether data is successfully decoded, so as to ensure that the RX UE can receive the new transmitted SCI or retransmission scheduled by the base station during this period, where the retransmission includes retransmission of a current HARQ process, and retransmission of another HARQ process. The newly transmitted SCI may also include newly transmitted SCI of a current HARQ process, or newly transmitted SCI of another HARQ process. Alternatively, because the RX UE starts the retransmission timer, and the RX UE is in a wakeup state, the RX UE may receive data scheduled by the base station, which may be newly transmitted SCI, retransmission, or the like, thereby avoiding a packet loss on the RX UE.

Further, when the RX UE starts the RTT timer, whether other conditions need to be met in addition to the triggering of the SCI is met. In Example 2, when receiving the SCI, the RX UE may start the RTT timer in the first symbol in the SL HARQ feedback resource or in the first symbol after the SL HARQ feedback resource. However, when the RTT timer expires, the RX UE does not start the retransmission timer. However, the RX UE further needs to determine whether the RX UE successfully sends the HARQ feedback, and starts the retransmission timer only when the RX UE fails to send the HARQ feedback. That is, when the RTT timer expires, and the RX UE fails to send a HARQ feedback, the RX UE starts the retransmission timer. In a possible example, a process of starting the retransmission timer in the foregoing process may be as follows: When receiving the SCI from the TX UE, the RX UE may start the RTT timer in a first symbol in a resource used to send the HARQ feedback of the SCI or the SL data scheduled by using the SCI, or in a first symbol after a resource used to send the HARQ feedback of the SCI or the SL data scheduled by using the SCI. When the RTT timer expires, the RX UE may determine whether the HARQ feedback of the SCI or the SL data scheduled by using the SCI is successfully sent. If the message fails to be sent, the retransmission timer is started. When the RX UE successfully sends the foregoing HARQ feedback, whether the solution in this application is used is not limited. For example, in a possible manner, when the RX UE successfully sends the foregoing HARQ feedback, and the HARQ is a NACK, that is, when data fails to be decoded, the RX UE starts the retransmission timer.

In this embodiment of this application, a reason why the RX UE fails to send the HARQ feedback may include a reason such as prioritization (prioritization) or a conflict of the RX UE why the RX UE fails to send the HARQ feedback. For the foregoing example 2, in a possible implementation, after receiving the SCI, the RX UE starts an RTT timer and stops a retransmission timer in the first symbol in the SL HARQ feedback resource or in the first symbol after the SL HARQ feedback resource. When the RTT timer expires, and the Rx UE successfully decodes the data but fails to send the HARQ due to a low priority of a conflict, the RX UE starts the retransmission timer.

Further, when the RX UE starts the RTT timer, whether other conditions need to be met in addition to the triggering of the SCI is met. In Example 3, when receiving the SCI, the RX UE may start the RTT timer in the first symbol in the SL HARQ feedback resource or in the first symbol after the SL HARQ feedback resource. When the RTT timer expires, the RX UE starts the retransmission timer. In an example, the foregoing process may further be described as: After the RX UE receives the SCI, regardless of whether successfully sending the HARQ, the RX UE starts the RTT timer and stops the retransmission timer in the first symbol in the SL HARQ feedback resource or in the first symbol after the SL HARQ feedback resource. When the RTT timer expires (regardless of whether data is successfully decoded), the RX UE starts the retransmission timer.

According to the foregoing implementation, when the RX UE fails to send the HARQ feedback, the RTT timer and the retransmission timer can still be started. Therefore, a waste of power consumption of the RX UE caused when the RX UE does not start the retransmission timer because the HARQ feedback fails to be sent or the HARQ feedback is not sent.

Embodiment 1 of this application focuses on how the RX UE starts the RTT timer and the retransmission timer. How the TX UE starts the RTT timer and the retransmission timer is not limited. For example, in a possible implementation, the TX UE may start an RTT timer and a retransmission timer still by using a solution similar to that on the RX UE side. For example, in a possible embodiment, the procedure shown in FIG. 2C may further include the following steps.

Step 203: The TX UE starts the RTT timer based on the SL HARQ feedback resource. After sending the SCI, the TX UE may start the RTT timer in a first time unit in the SL HARQ feedback resource or in a first time unit after the SL HARQ feedback resource. The SL HARQ feedback resource may be configured or the like. For example, the resource may be configured by the TX UE for the TX UE. Therefore, a specific location of the SL HARQ feedback resource may be learned by the TX UE. For example, the SL HARQ feedback resource is configured. After sending the SCI, the TX UE may start the RTT timer in a first time unit in a configured SL HARQ feedback resource, or in a first time unit after a configured SL HARQ feedback resource. Similar to the foregoing description, when the TX UE starts the RTT timer, and the retransmission timer is running, the TX UE may further stop the retransmission timer.

It can be learned from the description in step 200 to step 201 that, for the manner in which the RX UE starts the foregoing description, the RTT timer and the retransmission timer are started, thereby avoiding a packet loss on the RX UE side. However, in this embodiment of this application, if the TX UE and the RX UE use a same manner to start the RTT timer and the retransmission timer, that is, the solutions in step 203 and step 204, the TX UE and the RX UE use a same solution to start the RTT timer and the retransmission timer, so that an activation time of the RTT timer and the retransmission timer are aligned.

Step 204: The TX UE may whether to start the retransmission timer based on the RTT timer. For example, in a possible implementation, when the RTT timer expires, the TX UE may start the retransmission timer. Alternatively, when the RTT timer expires, the TX UE may determine whether the TX UE meets a preset condition, and if yes, start the retransmission timer. For example, the preset condition may include one or more of the following conditions. This is not limited.
1. The TX UE successfully receives the HARQ feedback, the HARQ feedback includes a HARQ feedback of the SCI or the SL data scheduled by using the SCI, and the HARQ feedback is a NACK.
2. The TX UE fails to receive the HARQ feedback.
3. The TX UE sends a HARQ feedback to the network device, where the HARQ feedback is a NACK.

According to the foregoing method, the TX UE and the RX UE can start the RTT timer and the retransmission timer based on the SL HARQ feedback resource, so that starting of the RTT timer and starting of the retransmission timer are aligned, thereby preventing starting of the RTT timer and the retransmission timer when the TX UE sends a NACK to a base station. However, since the RX UE side fails to send the HARQ feedback, the RTT timer and the retransmission timer are not started, and therefore the RX UE is in a sleep state. As a result, the RX UE cannot receive SL data retransmitted by the TX UE, causing a packet loss on the RX UE side.

An embodiment of this application further provides a sidelink communication method. A difference between the method and a manner of the foregoing procedure shown in FIG. 2C lies in: In the procedure shown in FIG. 2C, when a specific condition is met, the UE first starts an RTT timer, and starts a retransmission timer based on the RTT timer. In this method, when a specific condition is met, the UE starts the retransmission timer.

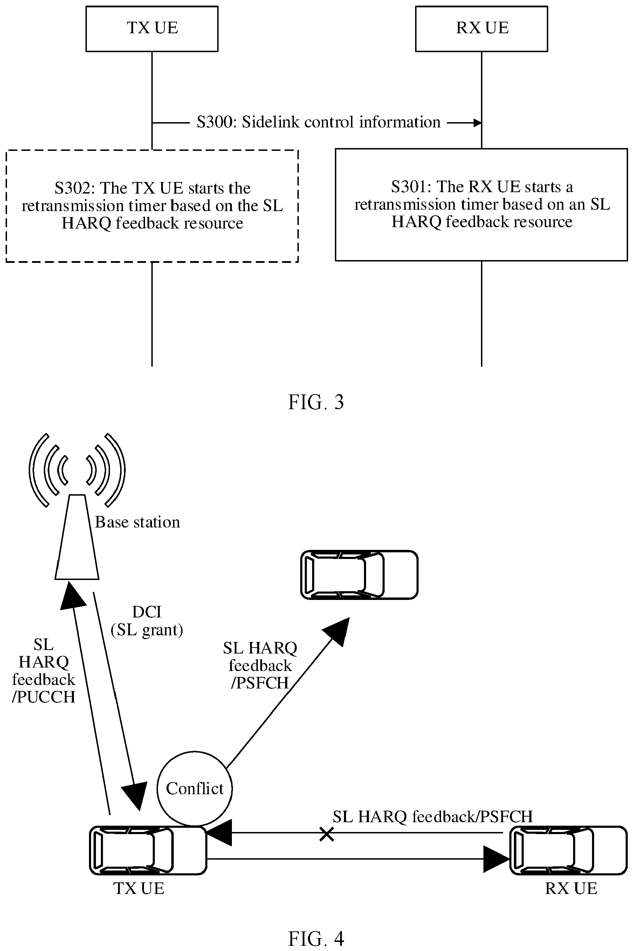

For example, the first communication device is RX UE, the second communication device is TX UE, and the second timer is a retransmission timer. As shown in FIG. 3, a procedure of a sidelink communication method is provided, and includes at least the following steps.

Step 300: The RX UE receives sidelink control information from the TX UE. The sidelink control information may be SCI, PSCCH, first-level SCI, second-level SCI, or first-level SCI and second-level SCI, or the like. In the following description, for example, the sidelink control information is SCI.

Step 301: The RX UE starts a retransmission timer based on an SL HARQ feedback resource, where the SL HARQ feedback resource is used for transmitting a HARQ feedback of the SCI or SL data scheduled by using the SCI.

A process in which the RX UE starts the retransmission timer based on the SL HARQ feedback resource is similar to the process in which the RX UE starts the RTT timer based on the SL HARQ feedback resource, and details are not described again. For example, refer to the related description in the foregoing step 201. For example, in a possible implementation, when receiving the SCI, the RX UE may start the retransmission timer in the first symbol in the SL HARQ feedback resource or in the first symbol after the SL HARQ feedback resource. Alternatively, when receiving the SCI, the RX UE may determine whether the preset condition is met currently, and if yes, start the retransmission timer. If not, the RX UE does not start the retransmission timer. In Example 1, the preset condition may be that the TX UE fails to send the HARQ feedback of the SCI or the SL data scheduled by using the SCI, and a reason for skipping sending the HARQ feedback may be a reason such as a conflict or prioritization of the RX UE, or the like. After receiving the SCI, when the RX UE determines that the HARQ fails to be sent due to a reason such as a conflict priority or prioritization, the RX UE may start the retransmission timer in the first symbol in the SL HARQ feedback resource, or in the first symbol after the SL HARQ feedback resource.

Similar to the foregoing, Embodiment 1 focuses on the following: A process how to the RX UE side starts the retransmission timer. The process how the TX UE side starts a retransmission timer is not limited. For example, in a possible implementation, the procedure shown in FIG. 3 may further include the following steps.

Step 302: The TX UE starts the retransmission timer based on the SL HARQ feedback resource. For example, when sending the SCI, the TX UE may start the retransmission timer in a first time unit in the SL HARQ feedback resource or a first time unit after the SL HARQ feedback resource. Alternatively, after the SCI is sent and when the preset condition is met, the TX UE starts the retransmission timer in a first time unit in the SL HARQ feedback resource or a first time unit after the SL HARQ feedback resource. For the preset condition that needs to be met, refer to the description in FIG. 2C. Details are not described again.

According to the foregoing description, when the foregoing condition is met, the RX UE may start the retransmission timer. Therefore, a packet loss on the RX UE since the RX UE fails to send the HARQ feedback, the RX UE does not start the retransmission timer, and therefore the RX UE is in a sleep state can be avoided. In the solution of this embodiment of this application, the RX UE may further start the retransmission timer as early as possible.

### Embodiment 2

Embodiment 2 of this application provides a sidelink communication method. As shown in FIG. 4, the method may be applied to a scenario in which RX UE successfully sends a HARQ feedback, but TX UE fails to receive the HARQ feedback due to a sending and receiving conflict of the TX UE. Before the method is described, this embodiment is first described as follows: 1. In the following description, the TX UE receives no HARQ feedback or the TX UE receives no PSFCH. 2. In the following description, in a case in which the HARQ is not explicitly defined as a NACK, the following HARQ may be replaced with an ACK or a NACK. Unless otherwise specified, description is not repeated in the following description.

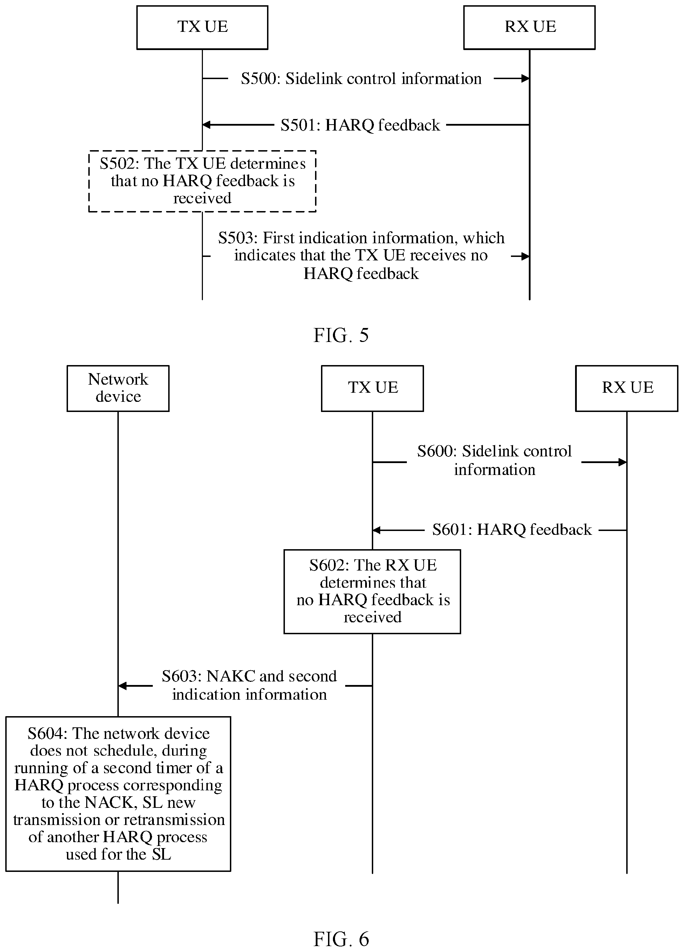

For example, the first communication device is TX UE, the second communication device is RX UE, the first timer is an RTT timer, and the second timer is a retransmission timer. As shown in FIG. 5, a procedure of a sidelink communication method is provided and includes at least the following steps.

Step 500: The TX UE sends sidelink control information to the RX UE. For description of the sidelink control information, refer to the description in the foregoing step 200, and details are not described herein again. In the following description, for example, the sidelink control information is SCI.

Step 501: The RX UE sends HARQ feedback to the TX UE, where the HARQ feedback includes a HARQ feedback of the SCI or SL data scheduled by using the SCI.

For example, in a possible implementation, after the RX UE receives the SCI and if successfully decodes the SCI or the SL data scheduled by using the SCI, the HARQ feedback sent by the RX UE to the TX UE may be an ACK. Alternatively, if the RX UE fails to decode the SCI or the SL data scheduled by using the SCI, the HARQ feedback sent by the RX UE to the TX UE may be a NACK.

Optionally, step 502: The TX UE determines that no HARQ feedback is received.

According to the foregoing description, in step 501, the RX UE sends the HARQ feedback to the TX UE. However, due to various reasons, the TX UE may not receive the foregoing HARQ feedback. Optionally, a reason why the TX UE receives no HARQ feedback may include a case in which the TX UE receives no HARQ feedback due to a sending and receiving conflict or prioritization (prioritization). The sending and receiving conflict of the TX UE may include: A resource for the TX UE to send the HARQ feedback conflicts with a resource used to receive the HARQ feedback. The conflicting resource may include overlapping of time-domain resources, overlapping of frequency domain resources, overlapping of both time-domain resources and frequency domain resources, and the like. As a result, the TX UE fails to receive the HARQ feedback, or the like.

Step 503: The TX UE sends first indication information to the RX UE, where the first indication information indicates that the TX UE receives no HARQ feedback.

In this embodiment of this application, when receiving the indication information used to indicate that the TX UE receives no HARQ feedback, the RX UE may perform the following operations. When the RTT timer expires, the RX UE can start the retransmission timer without considering whether decoding is successful. The reasons are as follows: In a current solution, after sending the HARQ feedback, the RX UE starts the RTT timer. When the RTT timer expires and the RX UE fails to decode data, the retransmission timer can be started. However, in this embodiment of this application, because the TX UE receives no SL HARQ feedback, the TX UE may send a NACK to the base station to request the base station to allocate the SL resource for retransmission, and send retransmitted SL data to the RX UE based on the SL resource for retransmission allocated by the base station. In this embodiment of this application, to ensure that the RX UE can receive the retransmitted SL data, the TX UE may send the foregoing indication to the RX UE. When the RX UE receives the foregoing indication, and the RTT timer expires, the RX UE starts the retransmission timer regardless of whether the data is successfully decoded, which ensures that the RX UE can start the retransmission timer and receive the SL data retransmitted by the TX UE, thereby avoiding packet loss on the RX UE.

Optionally, in this embodiment of this application, to determine that the RX UE can receive the first indication information, the RX UE may further start a fifth timer after sending the HARQ feedback. During running of the fifth timer, the RX UE is in an active time, that is, a wakeup state.

Further, when or after the RX UE sends the HARQ feedback, the RX UE may further start an RTT timer. For example, the RX UE starts the RTT timer in a first time unit after the HARQ feedback is sent. When the RTT timer expires and the first indication information is received, the retransmission timer is started. If the RX UE receives no first indication information, and the RTT timer expires, whether the RX UE starts the retransmission timer is not limited. For example, in a possible implementation, if the RX UE receives no first indication information, the RTT timer expires, and the RX UE fails to decode the data, the retransmission timer is started. If the RX UE successfully decodes the data, the retransmission timer is not started.

With regard to the foregoing method, a specific example is provided, and the example includes the following steps. The TX UE sends SCI to the RX UE. When receiving the SCI, the RX UE sends the HARQ feedback of the SCI or the SL data scheduled by using the SCI to the TX UE. The TX UE preferentially sends PSFCH because a resource used to send the PSFCH conflicts with a resource used to receive the PSFCH. As a result, the TX UE may not receive the PSFCH of the RX UE, and the TX UE may send indication information to the RX UE, where the indication information indicates that the RX UE receives no PSFCH. After the RX UE receives the foregoing indication information, when the RTT timer expires (regardless of whether data is successfully decoded), the RX UE starts the retransmission timer, so as to ensure that SL data scheduled by the base station in this time period can be received, where the SL data includes newly transmitted SCI, retransmission of a current or another SL HARQ process, and the like. Optionally, to determine that the RX UE can receive the indication information, after sending the HARQ feedback, the RX UE may start a fifth timer, for example, a timer T1. During running of the fifth timer, the RX UE is in an active time, that is, a wakeup state.

According to the foregoing method, when the TX UE determines that no HARQ feedback of the RX UE is received due to a reason such as a sending and receiving conflict or prioritization of the TX UE, the TX UE may send indication information to the RX UE. When the RX UE receives the indication information, and the RTT timer expires, the retransmission timer is started regardless of whether the data is successfully decoded, so that the RX UE is in a wakeup state and receives retransmission sent by the TX UE, thereby avoiding packet loss on the RX UE side.

### Embodiment 3

Embodiment 3 provides a sidelink communication method. An application scenario may be the following scenario. RX UE successfully sends HARQ feedback, but TX UE receives no HARQ feedback. Different from the foregoing Embodiment 2, the reason why the TX UE currently receives no HARQ feedback is not a sending and receiving conflict or prioritization (prioritization) of the TX UE.

Before the method in this embodiment of this application is described, this embodiment is described as follows: 1. In the following description, the HARQ feedback may be replaced with PSFCH. 2. In the following description, in a case in which the HARQ is not explicitly defined as a NACK, the HARQ may be replaced with an ACK or a NACK. Unless otherwise specified, description is not repeated.

For example, the first communication device is TX UE, the second communication device is RX UE, the third communication device is a network device, the first timer is an RTT timer, and the second timer is a retransmission timer. As shown in FIG. 6, a procedure of a sidelink communication method is provided and includes at least the following steps.

Step 600: The TX UE sends sidelink control information to the RX UE. For description of the sidelink control information, refer to the description in the foregoing step 200, and details are not described herein again. In the following description, for example, the sidelink control information is SCI.

Step 601: The RX UE sends HARQ feedback to the TX UE, where the HARQ feedback is a HARQ feedback of the SCI or SL data scheduled by using the SCI.

For example, when receiving the SCI, the RX UE may determine whether the SCI or the SL data scheduled by using the SCI is successfully decoded. If decoding is successful, the HARQ feedback sent by the RX UE to the TX UE indicates an ACK. Otherwise, the HARQ feedback sent by the RX UE to the TX UE is a NACK.

Step 602: The TX UE determines that no HARQ feedback is received.

It can be learned from the foregoing description that, in step 601, the RX UE sends the HARQ feedback to the TX UE, but in step 602, the TX UE receives no HARQ feedback. In this embodiment of this application, a reason why the TX UE receives no HARQ feedback is not limited. For example, the TX UE may not receive the HARQ feedback due to a sending and receiving conflict or prioritization of the TX UE, or the TX UE may not receive the HARQ feedback due to other reasons than the foregoing reasons, such as poor transmission conditions. In a design, the solution in this embodiment of this application may be applied to a scenario in which the TX UE receives no HARQ feedback of the RX UE due to a reason other than a sending and receiving conflict or prioritization of the TX UE.

Step 603: The TX UE sends second information to the network device. Optionally, because the TX UE receives no HARQ feedback, in addition to sending the second information to the network device, the TX UE may further send a NACK to the network device, where the NACK may be used to request an SL retransmission resource from the network device. When the TX UE sends the NACK and the second information to the network device, the NACK and the second information may be sent separately, or may be carried in a same message for sending, which is not limited.

In a possible implementation, when determining that the TX UE receives no HARQ feedback, the TX UE may send the second information to the network device, where the second information indicates that the TX UE receives no HARQ feedback. When the network device receives the second information indicating that the TX UE receives no HARQ feedback, the network device may not schedule, during running of the retransmission timer of a corresponding HARQ process, SL new transmission or retransmission of another HARQ process used for the SL.

Alternatively, in another possible implementation, when the TX UE determines that no HARQ feedback is received, the TX UE may request the network device not to schedule, during running of the retransmission timer of a corresponding HARQ process, SL new transmission or retransmission of another HARQ process used for the SL. In this case, the TX UE may send, to the network device, second information used to indicate that the network device does not to schedule, during running of the retransmission timer of the corresponding HARQ process, SL new transmission or retransmission of another HARQ process used for the SL.

Optionally, step 604: The network device does not schedule, during running of a second timer of the HARQ process corresponding to a NACK, SL new transmission or retransmission of another HARQ process used for the SL.

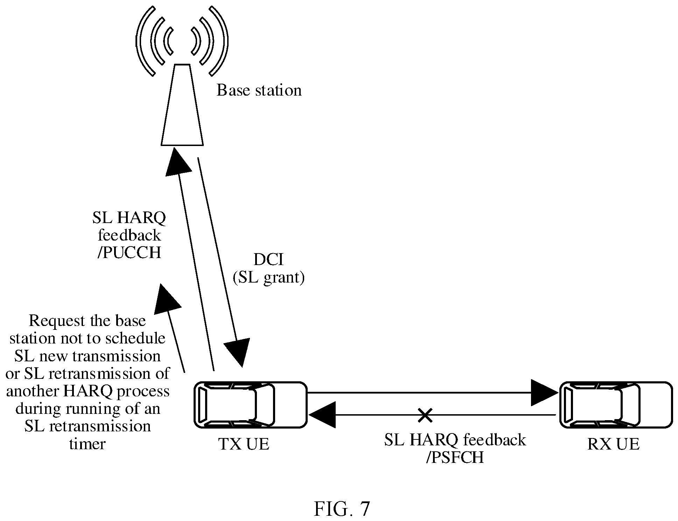

For the foregoing procedure shown in FIG. 6, as shown in FIG. 7, a specific example is provided and includes the following steps. The RX UE successfully sends the SL HARQ feedback, but the TX UE receives no SL HARQ feedback from the RX UE. The TX UE may determine the reason why the SL HARQ feedback is not received. When it is determined that the reason for not receiving the SL HARQ feedback is not a sending and receiving conflict or prioritization (prioritization) of the TX UE, when feeding back a NACK to the base station, the TX UE may instruct the base station not to schedule new SL transmissions or retransmissions of another HARQ processes during running of the retransmission timer of Uu DRX subsequently started by the TX UE. The retransmission timer of the Uu DRX subsequently started by the TX UE may be explained as follows: The TX UE sends the retransmission timer of the HARQ process corresponding to the NACK to the base station, where the foregoing HARQ process is a HARQ process on the Uu air interface, a corresponding SL process or SL HARQ process in the SL.

According to the foregoing method, when the RX UE successfully sends the HARQ feedback, and the RX UE fails to receive the HARQ feedback, the TX UE may report a NACK to the base station. An improvement of this application is as follows: In addition to reporting a NACK to the base station, the TX UE further reports second information to the base station, where the second information is used to instruct the base station to schedule only retransmission of a current HARQ process during running of the retransmission timer of the HARQ process corresponding to the NACK. The reasons are as follows: In a current solution, after the RX UE sends the HARQ feedback, the RX UE may start the RTT timer. When the RTT timer expires and the RX UE fails to decode data, that is, the RX UE starts the retransmission timer only when the HARQ feedback sent by the RX UE is a NACK. However, when the RTT timer expires, and the RX UE successfully decodes data, that is, when the HARQ feedback sent by the RX UE is an ACK, the RX UE does not start the retransmission timer. In embodiments of this application, because the TX UE receives no HARQ feedback of the RX UE, the TX UE does not know whether the HARQ feedback sent by the RX UE is a NACK or an ACK. Therefore, in embodiments of this application, in the foregoing case, the TX UE no longer determines whether the HARQ feedback sent by the RX UE is an ACK or a NACK, and the TX UE sends the second information to the base station in a unified manner, to instruct the base station to schedule only retransmission of a current SLHARQ process, and not to schedule SL new transmission or retransmission of another SL process. Correspondingly, the TX UE sends only retransmission of the current SL HARQ process to the RX UE. The advantages are as follows: If the HARQ feedback sent by the RX UE is a NACK, the RX UE starts the retransmission timer on the SL DRX, and the RX UE may receive the retransmission of the current SL HARQ process sent by the TX UE. If the HARQ feedback sent by the RX UE indicates an ACK, the RX UE may not receive the retransmission of the current SL HARQ process. However, since the HARQ feedback fed back by the RX UE indicates an ACK, which indicates that data of a corresponding SL process has been successfully decoded by the RX UE during last transmission, the failure of receiving the retransmission during the current transmission does not matter.

### Embodiment 4

Embodiment 4 provides a sidelink communication method. An application scenario of the method may be the following scenario. If an SL DRX configuration between TX UE and RX UE does not match a Uu DRX configuration between the TX UE and a base station, the RX UE may fail to receive SL data from the RX UE, causing packet loss on the RX UE. For example, in a scenario, when a retransmission timer of the SL DRX of the RX UE expires, the RX UE is in a sleep state and cannot monitor SCI, and in this case, the TX UE sends retransmitted SCI to the RX UE, the RX UE fails to receive the retransmitted SCI, causing packet loss on the RX UE.

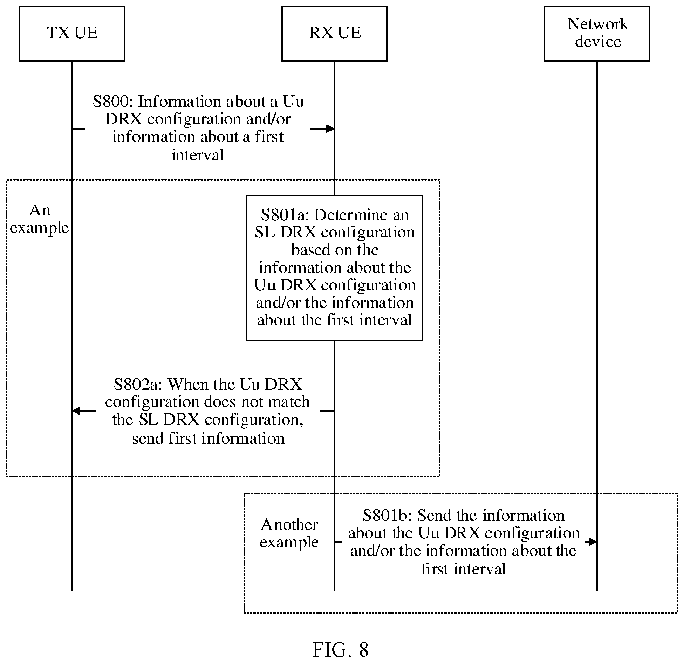

For example, a first communication device is RX UE, a second communication device is TX UE, first DRX is Uu DRX, second DRX is SL DRX, a first timer is an RTT timer, and a second timer is a retransmission timer. As shown in FIG. 8, a procedure of a sidelink communication method is provided and includes at least the following steps.

Step 800: The RX UE receives information about a Uu DRX configuration and/or information about a first interval from the TX UE.

The TX UE may independently send the information about a Uu DRX configuration and/or the information about the first interval to the RX UE. For example, the TX UE may periodically send the information about a Uu DRX configuration and/or the information about the first interval to the RX UE. Alternatively, when the first condition is met, the TX UE may send the information about a Uu DRX configuration and/or the information about the first interval to the RX UE. For example, the first condition may include at least one of the following: the first interval changes; a variation of the first interval is greater than a first threshold; the information about a Uu DRX configuration changes; and a variation of the information about a Uu DRX configuration is greater than a second threshold. The first threshold and the second threshold may be specified in a protocol or preconfigured, which is not limited.

Alternatively, in another possible implementation, the TX UE may send the information about a Uu DRX configuration and/or the information about the first interval to the RX UE based on a request of the RX UE. For example, the RX UE may send a first request message to the TX UE, where the first request message is used to request the RX UE to send the information about a Uu DRX configuration and/or the information about the first interval to the TX UE. When the TX UE receives the first request message, the TX UE sends the information about a Uu DRX configuration and/or the information about the first interval to the RX UE.

The information about a Uu DRX configuration is described as follows: The information about a Uu DRX configuration may include a configuration of an RTT timer and a configuration of a retransmission timer. For example, configuration information of the RTT timer may be running duration of the RTT timer, and configuration information of the retransmission timer may be running duration of the retransmission timer. The information about the first interval is described as follows: A first interval may be an interval between a first resource and a second resource, or a minimum value of the interval between the first resource and the second resource. For example, the first resource may be a PUCCH, and the second resource may be a PSFCH. In the following description, for example, the first interval is a minimum value of a PSFCH-PUCCH interval.

In a possible implementation, when the RX UE receives the information about a Uu DRX configuration and the minimum value of the PSFCH-PUCCH interval, the RX UE may perform the following operations.

Step 801a: The RX UE determines an SL DRX configuration based on the Uu DRX configuration and/or the minimum value of the PUCCH-PSFCF interval. For example, the SL DRX configuration includes a configuration of an RTT timer and a configuration of a retransmission timer.

Optionally, step 802a: When the Uu DRX configuration does not match the SL DRX configuration, or the minimum value of the PSFCH-PUCCH interval is inappropriate, the RX UE may send first information to the TX UE, where the first information notifies the TX UE that the Uu DRX configuration does not match the SL DRX configuration, or the minimum value of the PSFCH-PUCCH interval is inappropriate. Further, the TX UE may notify the network device that the network device adjusts the Uu DRX configuration and/or the minimum value of the PSFCH-PUCCH interval. For example, the minimum value of the PSFCH-PUCCH interval is related to a sub-carrier space (sub-carrier space, SCS) configuration of an SL bandwidth part (bandwidth part, BWP) and an SCS configuration for activating a UL BWP in a primary cell. Therefore, in this embodiment of this application, the minimum value of the PSFCH-PUCCH interval may be adjusted by adjusting the SCS configuration of the SL BWP and/or the SCS configuration for activating the UL BWP in the primary cell.

In another possible implementation, when the RX UE receives the information about a Uu DRX configuration and/or the minimum value of the PSFCH-PUCCH interval in step 800, the RX UE may notify the network device of the information about a Uu DRX configuration and/or the minimum value of the PSFCH-PUCCH interval, for example:

Step 801b: The RX UE sends the information about a Uu DRX configuration and/or the minimum value of the PSFCH-PUCCH interval to a network device of the RX UE.

For example, if the SL DRX configuration is determined by the network device of the RX UE, when the network device corresponding to the RX UE receives the information about a Uu DRX configuration and/or the minimum value of the PSFCH-PUCCH interval, the network device may perform the following subsequent operations. For example, the network device corresponding to the RX UE may determine the information about an SL DRX configuration based on the information about a Uu DRX configuration and/or the minimum value of the PSFCH-PUCCH interval. If the Uu DRX configuration does not match the SL DRX configuration, the SL DRX configuration may be adjusted. Alternatively, the RX UE is notified that the Uu DRX configuration does not match the SL DRX configuration, or that the minimum value of the PSFCH-PUCCH interval is inappropriate. Then, the RX UE notifies the TX UE of the information, and the TX UE notifies the network device of the RX UE of the information. After receiving the information, the network device corresponding to the TX UE adjusts the Uu DRX configuration and/or the minimum value of the PSFCH-PUCCH interval.

For the foregoing procedure, a specific example is provided. The TX UE may send, to the RX UE, a Uu DRX configuration about the TX UE serving as a receiving end and a minimum value of a PSFCH-PUCCH interval, where the foregoing Uu DRX configuration may include a configuration of an RTT timer and a configuration of a retransmission timer. In a possible implementation, the TX UE may independently send the Uu DRX configuration and the minimum value of the PUCCHH-PSFCH interval to the RX UE. For example, when at least one of an RTT timer, a retransmission timer, or a minimum value of a PUCCH-PSFCH interval of the Uu DRX UE changes or a variation is less than a preset threshold, the TX UE sends the Uu DRX configuration and the minimum value of the PUCCH-PSFCH interval to the RX UE. Alternatively, in another possible implementation, when the TX UE receives a request from the RX UE, the TX UE sends the Uu DRX configuration and the minimum value of the PSFCH-PUCCH interval to the RX UE.

In this example, when the RX UE receives the Uu DRX configuration and the minimum value of the PSFCH-PUCCH interval, the RX UE may determine the SL DRX configuration. Then, the RX UE may determine whether the SL DRX configuration matches values of the RTT timer and the retransmission timer in the Uu DRX. If no, the RX UE may notify the TX UE. Subsequently, when the TX UE receives mismatch notification, the TX UE may request a corresponding base station to change the values of the RTT timer and/or the retransmission timer in the Uu DRX; and/or the TX UE requests the base station to change the SCS configuration of the SL BWP or the SCS configuration for activating the UL BWP in the primary cell, or the like, so as to update the minimum value of the PSFCH-PUCCH interval or the like.

According to the foregoing method related to "mismatch" notification, the network device of the RX UE may further send, to the RX UE, the RX UE may further send, to the TX UE, or the TX UE may further send, to the network device of the TX UE, adjustment information about the Uu DRX configuration and/or adjustment information of the minimum value of the PSFCH-PUCCH interval, where the adjustment information and the "mismatch" notification may be sent together, or sent separately.

According to the foregoing method, the SL DRX configuration can match the Uu DRX configuration, thereby avoiding that the RX UE cannot receive SL retransmission and/or new transmission scheduled by the base station during running of the Uu DRX retransmission timer.

### Embodiment 5

Embodiment 5 of this application provides a sidelink communication method. An application scenario of the method may be the following scenario. DCI or RRC carrying SL grant and sent by a base station to the TX UE may include indication information about an SL HARQ feedback resource. If the SL HARQ feedback resource exists, it indicates that the TX UE may send an SL HARQ feedback to the base station. Otherwise, it indicates that the TX UE does not need to send the SL HARQ feedback to the base station. If there is no SL HARQ feedback resource, an RTT timer and a retransmission timer may not be started for Uu DRX between the TX UE and the base station. However, the RX UE does not know that an SL HARQ feedback resource is not configured for a current SL HARQ process. If the RX UE starts a corresponding retransmission timer on SL DRX, power consumption of the RX UE is wasted.

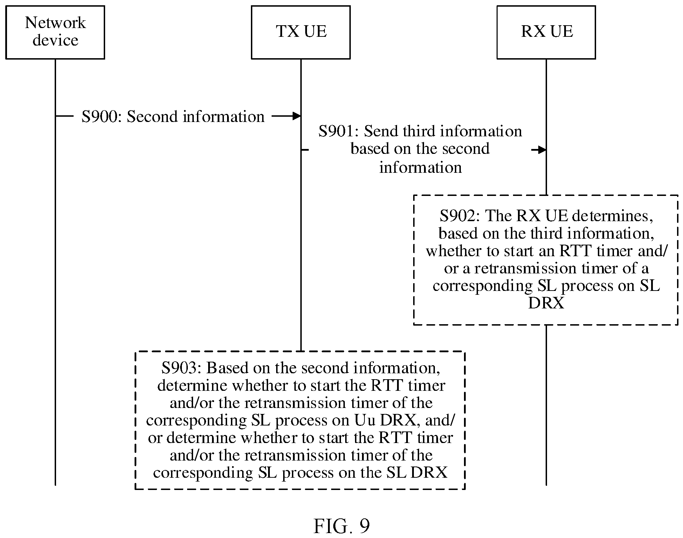

A first communication device is TX UE, a second communication device is RX UE, a third communication device is a network device, first DRX is Uu DRX, second DRX is SL DRX, a first timer and a second timer are respectively an RTT timer and a retransmission timer associated with the SL DRX. A third timer and a fourth timer are respectively an RTT timer and a retransmission timer associated with the Uu DRX. As shown in FIG. 9, a procedure of a sidelink communication method is provided and includes at least the following steps.

Step 900: The TX UE receives second information from the network device, where the second information may be DCI, RRC, or the like, and the second information may carry SL grant information. The second information may carry indication information, and the indication information indicates whether an SL HARQ feedback resource exists, or is used to indicate whether an SL HARQ feedback resource exists (in this case, if the indication information is empty, it indicates that no SL HARQ feedback resource exists), where the SL HARQ feedback resource may be a PUCCH resource, a PUSCH resource, or the like. The SL HARQ feedback resource is used by the TX UE to send an SL HARQ feedback to the network device. Optionally, the second information may further carry SL grant and the like, where the SL grant is used by the network device to allocate an SL resource to the base station.

In a possible implementation, the second information carries indication information, where the indication information indicates whether an SL HARQ feedback resource exists, which may be specifically: The indication information indicates whether an SL HARQ feedback resource exists in a first SL process or a first SL transport block (transport block, TB).

Step 901: The TX UE sends third information to the RX UE based on the second information, where the third information notifies whether to start, on SL DRX, an RTT timer and/or a retransmission timer of a corresponding SL process, and the SL process may be an SL HARQ process or the like; or the third information indicates whether the SL HARQ feedback resource exists.

Optionally, step 902: The RX UE determines, based on the third information, whether to start, on the SL DRX, the RTT timer and/or the retransmission timer of the corresponding SL process.

In a possible implementation, when the third information is used to instruct to start the RTT timer and/or the retransmission timer in an SL process corresponding to SL DRX, or when the third information indicates that an SL HARQ feedback resource exists, and a first condition is met, the RX UE starts, on the SL DRX, the RTT timer and/or the retransmission timer of the corresponding SL process. In a possible implementation, the first condition may be that after receiving the SCI, the RX UE starts the RTT timer in a first symbol in the PSFCH resource or in a first symbol after the PSFCH resource. When the RTT timer expires, the RX UE starts the retransmission timer. In another possible implementation, the first condition may be that the RX UE starts the RTT timer in a first symbol after the SL HARQ feedback is sent. When the RTT timer expires, and SL data fails to be decoded, the retransmission timer is started.

In another possible implementation, when the third information is used to instruct not to start the RTT timer and/or the retransmission timer in the SL process corresponding to the SL DRX, or when the third information indicates that an SL HARQ feedback resource exists, and the first condition is met, the RX UE does not start, on the SL DRX, the RTT timer and/or the retransmission timer of the corresponding SL process. For the first condition, refer to the foregoing description. Details are not described again.

Optionally, step 903: The TX UE determines, based on the second information, whether to start, on Uu DRX, an RTT timer and/or a retransmission timer of a corresponding SL process, and/or determines whether to start, on the SL DRX, the RTT timer and/or the retransmission timer of the corresponding SL process.

In a possible implementation, when the second information indicates that the SL HARQ feedback resource exists, and the second condition is met, the TX UE starts, on the Uu DRX, the RTT timer and/or the retransmission timer of the corresponding SL process. The second condition may include: When or after receiving the DCI, the TX UE starts the RTT timer in a first symbol in an SL HARQ feedback resource used between the TX UE and the network, or in a first symbol after the SL HARQ feedback resource. When the RTT timer expires, the TX UE starts the retransmission timer. Alternatively, the second condition may include: The TX UE starts the RTT timer in a first symbol after the SL HARQ feedback is sent. When the RTT timer expires, and the SL HARQ feedback received from the RX UE is a NACK, or no SL HARQ feedback of the RX UE is received (a resource is configured), the TX UE starts the retransmission timer.

Further, when the second information indicates that an SL HARQ feedback resource exists, and the third condition is met, the TX UE may further start, on the SL DRX, the RTT timer and/or the retransmission timer of the corresponding SL process. For example, the third condition may include: when sending the SCI to the RX UE, the TX UE starts the RTT timer in a first time unit in an SL HARQ feedback resource used between the TX UE and the RX UE, or a first time unit after the resource. When the RTT timer expires, the retransmission timer is started, or when the RTT timer expires, and the SL HARQ feedback received from the RX UE is a NACK, or no SL HARQ feedback of the RX UE is received (a resource is configured), the retransmission timer is started.

In another possible implementation, when the second information indicates that no SL HARQ feedback resource exists, and the second condition is met, the TX UE does not start, on the Uu DRX, the RTT timer and/or the retransmission timer of the corresponding SL process. For the second condition, refer to the foregoing description. Details are not described again.

Further, when the second information indicates that no an SL HARQ feedback resource exists, and the third condition is met, the TX UE does not start, on the SL DRX, the RTT timer and/or the retransmission timer of the corresponding SL process. For the third condition, refer to the foregoing description. Details are not described again.

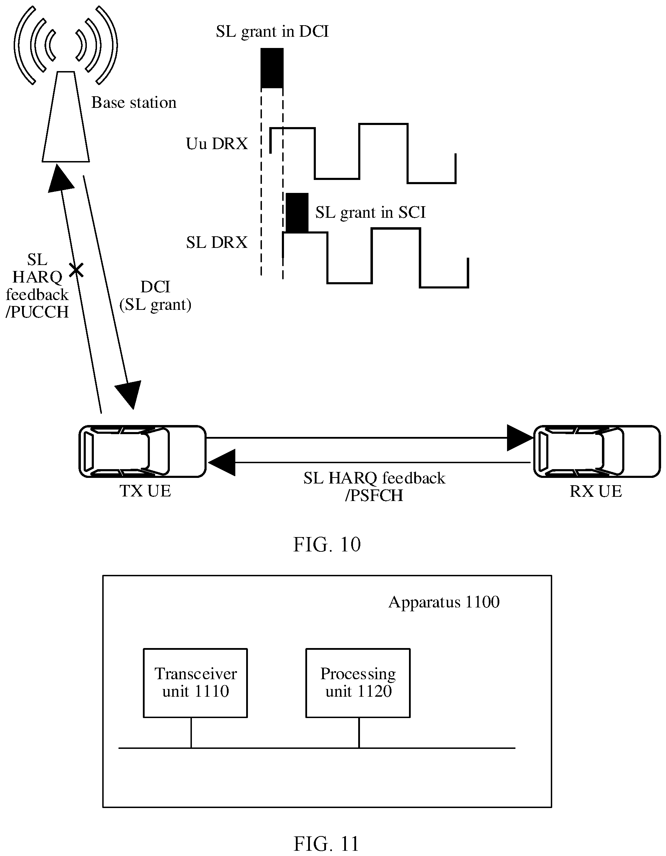

For the foregoing procedure shown in FIG. 9, a specific example is provided. As shown in FIG. 10, in this embodiment, the TX UE may receive DCI or RRC from the base station, where the DCI or the RRC may carry an SL grant. For example, the DCI may be DCI used in a DG or a CG type 2, and the RRC may be RRC used in a CG type 1, or the like.

In a possible implementation, if the DCI or RRC received by the TX UE from the base station indicates that there is a resource for the TX to send an SL HARQ feedback to the network (for example, a PUCCH resource or a PUSCH resource), the TX UE performs the following operations. When a current condition is met, the TX UE starts, on the Uu DRX and the SL DRX, the RTT timer and/or an sl retransmission timer of the corresponding HARQ process. When the current condition is met, the TX UE instructs the RX UE to start the RTT timer/the retransmission timer in the corresponding SL HARQ process (SL DRX), or instructs the RX UE that "there is a PUCCH resource in the corresponding sl HARQ process". Therefore, when the current condition is met, the RX UE starts the RTT timer and/or the retransmission timer of the corresponding sl HARQ process.

In another possible implementation, if the DCI or RRC received by the TX UE from the base station indicates that there is no resource for the TX to send the SL HARQ feedback to the network, the TX UE performs the following operations. The TX UE does not start, on the Uu DRX and the SL DRX, the RTT timer and/or retransmission timer of the corresponding HARQ process. The TX UE instructs the RX UE not to start the RTT timer and/or the retransmission timer in the corresponding SL HARQ process (SL DRX), or notifies the RX UE that "there is no PUCCH resource in the corresponding SL HARQ process". Accordingly, the RX UE determines not to start the RTT time and/or the retransmission timer of the corresponding SL HARQ process.

According to the foregoing method, a waste of power consumption of the RX UE caused when the RX UE does not know that the TX UE does not start a corresponding RTT timer and sl retransmission timer on the Uu DRX since no PUCCH resource is configured for an SL HARQ process and therefore starts a corresponding retransmission timer on the SL DRX can be avoided.

Notes: In this embodiment of this application, the foregoing embodiments may be used alone, or may be used in combination, or the like. This is not limited. For example, in a possible design, the foregoing Embodiment 2 and the foregoing Embodiment 3 may be used in combination. For example, when the TX UE cannot receive the SL HARQ feedback of the RX UE due to a reason such as a conflict or prioritization of the TX UE, the solution in the foregoing Embodiment 2 may be used. When the TX UE fails to receive the SL HARQ feedback of the RX UE due to other reasons, the solution in the foregoing Embodiment 3 or the like may be used.

FIG. 11 is a schematic diagram of an apparatus 1100 according to an embodiment of this application. The apparatus is configured to implement functions of the method executed by the first communication device, the second communication device, or the third communication device in the foregoing method embodiment. As shown in FIG. 11, the apparatus 1100 includes a transceiver unit 1110 and a processing unit 1120.

In a first embodiment, the apparatus 1100 may be a first communication device or a chip in the first communication device.

The transceiver unit 1110 is configured to receive sidelink control information from a second communication device; the processing unit 1120 is configured to start a first timer based on a sidelink SL hybrid automatic repeat request HARQ feedback resource, where the SL HARQ feedback resource is used for transmitting a HARQ feedback of the sidelink control information or SL data scheduled by using the sidelink control information; and the processing unit 1120 is further configured to start or skip starting a second timer based on the first timer, where
the first timer is used to indicate an expected minimum duration before resource configuration information or grant information for SL retransmission arrives, and the second timer is used to indicate a maximum duration required for receiving the resource configuration information or the grant information for the SL retransmission.

In a possible implementation, the starting the first timer based on the SL HARQ feedback resource includes:
starting the first timer in a first time unit in the SL HARQ feedback resource; or starting the first timer in a first time unit in a configured SL HARQ feedback resource; or starting the first timer in a first time unit after the SL HARQ feedback resource; or starting the first timer in a first time unit after a configured SL HARQ feedback resource.

In a possible implementation, the processing unit 1120 is further configured to: stop the second timer.

In a possible implementation, the starting the first timer based on the SL HARQ feedback resource includes:
failing to send or skipping sending the HARQ feedback, where the HARQ feedback is an acknowledgment ACK or a negative acknowledgment NACK; and starting the first timer based on the SL HARQ feedback resource.

In a possible implementation, the starting or skipping starting the second timer based on the first timer includes: when the first timer expires, and the sidelink control information or the SL data scheduled by using the sidelink control information is successfully decoded or fails to be decoded, starting, by the first communication device, the second timer, or when the first timer expires, starting the second timer.

In a possible implementation, the starting or skipping starting the second timer based on the first timer includes: when the first timer expires, and the HARQ feedback fails to be sent or is not sent, starting, by the first communication device, the second timer, where the HARQ feedback is an ACK or a NACK; or when the first timer expires, and the HARQ feedback is successfully sent or sent and the HARQ feedback is a NACK, starting, by the first communication device, the second timer.

In a possible implementation, the failing to send or skipping sending the HARQ feedback includes: failing to send or skipping sending the HARQ feedback due to prioritization (prioritization) or a conflict.

In a possible implementation, the starting the first timer based on the SL HARQ feedback resource includes: successfully sending or failing to send the HARQ feedback of the SCI or the SL data scheduled by using the SCI; and starting the first timer based on the SL HARQ feedback resource.

In a possible implementation, the starting or skipping starting the second timer based on the first timer includes: when the first timer expires, starting the second timer. (The second timer is started regardless of whether the SL data is successfully decoded.)

In a second embodiment, the apparatus 1100 may be a second communication device or a chip in the second communication device.

The transceiver unit 1110 is configured to send sidelink control information to a first communication device; the processing unit 1120 is configured to start a first timer based on an SL HARQ feedback resource; and the processing unit 1120 is further configured to start or skip starting a second timer based on the first timer, where the first timer is used to indicate an expected minimum duration before resource configuration information or grant information for SL retransmission arrives, and the second timer is used to indicate a maximum duration required for receiving the resource configuration information or the grant information for the SL retransmission.

In a possible implementation, the starting the first timer based on the SL HARQ feedback resource includes:
starting the first timer in a first time unit in the SL HARQ feedback resource; or starting the first timer in a first time unit in a configured SL HARQ feedback resource; or starting the first timer in a first time unit after the SL HARQ feedback resource; or starting the first timer in a first time unit after a configured SL HARQ feedback resource.

In a possible implementation, the processing unit 1120 is further configured to: stop the second timer.

In a possible implementation, the starting or skipping starting the second timer based on the first timer includes: when the first timer expires, starting the second timer.

In a possible implementation, the starting or skipping starting the second timer based on the first timer includes: when the first timer expires, if the second communication device successfully receives a HARQ feedback, the HARQ feedback includes a HARQ feedback of the sidelink control information or SL data scheduled by using the sidelink control information, and the HARQ feedback is a NACK, or if the second communication device fails to receive a HARQ feedback, or if the second communication device sends the HARQ feedback to a third communication device and the HARQ feedback is a NACK, starting, by the second communication device, the second timer.

In a third embodiment, the apparatus 1100 may be a first communication device or a chip in the first communication device.

The transceiver unit 1110 is configured to send sidelink control information to a second communication device; the processing unit 1120 is configured to determine that no HARQ feedback is received, where the HARQ feedback includes a HARQ feedback of the sidelink control information or SL data scheduled by using the sidelink control information; and the transceiver unit 1110 is further configured to send first information to the second communication device, where the first information indicates that the first communication device receives no HARQ feedback.

The determining that the HARQ feedback is not received includes: failing to receive the HARQ feedback due to a sending and receiving conflict or prioritization (prioritization).

In a fourth embodiment, the apparatus 1100 may be a second communication device or a chip in the second communication device.

The transceiver unit 1110 is configured to receive sidelink control information from a first communication device; the transceiver unit 1110 is further configured to send a HARQ feedback to the first communication device, where the HARQ feedback includes a HARQ feedback of the sidelink control information or SL data scheduled by using the sidelink control information; and The transceiver unit 1110 is further configured to receive first indication information from the first communication device, where the first indication information indicates that the first communication device receives no HARQ feedback.

In a possible implementation, the apparatus further includes a processing unit. The processing unit 1120 is configured to: after the HARQ feedback is sent, start a third timer, where the second communication device is in an active time during running of the third timer.

In a possible implementation, the failing to receive the HARQ feedback includes: failing to receive the HARQ feedback due to a sending and receiving conflict or prioritization (prioritization).

In a possible implementation, the processing unit 1120 is further configured to: when or after the HARQ feedback is sent, start a first timer; or start the first timer in a first time unit after the HARQ feedback is sent.

In a possible implementation, the processing unit 1120 is further configured to: when the first timer expires, start a second timer.

In a fifth embodiment, the apparatus 1100 may be a first communication device or a chip in the first communication device.

The transceiver unit 1110 is configured to send sidelink control information to a second communication device; the processing unit 1120 is configured to determine that no HARQ feedback is received, where the HARQ feedback includes a HARQ feedback of the sidelink control information or SL data scheduled by using the sidelink control information; and the transceiver unit 1110 is further configured to send second information or a NACK and the second information to the third communication device; where the second information indicates that the first communication device receives no HARQ feedback, or the second information indicates that the third communication device does not schedule, during running of the second timer of the HARQ process corresponding to the NACK, SL new transmission or retransmission of another HARQ process used for the SL, and the second timer is used to indicate a maximum duration required for receiving the resource configuration information or the grant information for the SL retransmission.

In a sixth embodiment, the apparatus 1100 may be a first communication device or a chip in the first communication device.

The transceiver unit 1110 is configured to receive second information or a NACK and the second information from the first communication device; where the second information indicates that the first communication device receives no HARQ feedback, or the second information indicates that the third communication device does not schedule, during running of the second timer of the HARQ process corresponding to the NACK, SL new transmission or retransmission of another HARQ process used for the SL, and the second timer is used to indicate a maximum duration required for receiving the resource configuration information or the grant information for the SL retransmission; and the processing unit 1120 is configured to: during running of the second timer of the HARQ process corresponding to the NACK, not to schedule SL new transmission or retransmission of another HARQ process used for the SL.

In a seventh embodiment, the apparatus 1100 may be a first communication device or a chip in the first communication device.

The transceiver unit 1110 is configured to receive information about a first DRX configuration and/or information about a first interval from a second communication device, where the first DRX configuration is a DRX configuration between the communication device and a third communication device, the first interval is an interval between a first resource and a second resource, the first resource is a resource for the second communication device to send an SL HARQ feedback to the third communication device, and the second resource is a resource for the first communication device to send an SL HARQ feedback to the second communication device; and the processing unit 1120 is configured to determine a second DRX configuration based on the information about the first DRX configuration and/or the information about the first interval, where the second DRX configuration is a DRX configuration between the first communication device and the second communication device. Alternatively, the transceiver unit 1110 is further configured to send the information about the first DRX configuration and/or the information about the first interval to the third communication device of the transceiver unit.

In a possible implementation, the first interval includes a minimum value of the interval between the first resource and the second resource.

In a possible implementation, the transceiver unit 1110 is further configured to: when the first DRX configuration does not match the second DRX configuration, send first information to the second communication device, where the first information notifies the second communication device that the first DRX configuration does not match the second DRX configuration.

In a possible implementation, the transceiver unit 1110 is further configured to send first request information to the second communication device, where the first request information is used to request the second communication device to send the information about the first DRX configuration and/or the information about the first interval to the first communication device.

In a possible implementation, the first DRX configuration includes a configuration of a third timer and a configuration of a fourth timer, and the second DRX configuration includes a configuration of a first timer and a configuration of a second timer; and the first timer and/or the third timer is used to indicate an expected minimum duration before resource configuration information or grant information for SL retransmission arrives, and the second timer and/or the fourth timer is used to indicate a maximum duration required for receiving the resource configuration information or the grant information for the SL retransmission.

In an eighth embodiment, the apparatus 1100 may be a second communication device or a chip in the second communication device.

The processing unit 1120 is configured to determine information about a first DRX configuration and/or information about a first interval, where the first DRX configuration is a DRX configuration between a second communication device and a third communication device, the first interval is an interval between a first resource and a second resource, the first resource is a resource for the second communication device to send an SL HARQ feedback to the third communication device, and the second resource is a resource for a first communication device to send the SL HARQ feedback to the second communication device; and the transceiver unit 1110 is configured to send the information about the first DRX configuration and/or the information about the first interval to the first communication device.

In a possible implementation, the first interval includes a minimum value of the interval between the first resource and the second resource.

In a possible implementation, the transceiver unit 1110 is further configured to: receive first information from the first communication device, where the first information notifies the second communication device that the first DRX configuration does not match a second DRX configuration, the second DRX configuration is DRX between the first communication device and the second communication device, and the second DRX configuration is used for SL communication between the first communication device and the second communication device, or the second DRX configuration is used for the first communication device to receive information sent by the second communication device.

In a possible implementation, when the first condition is met, the transceiver unit 1110 performs the step of sending the information about the first DRX configuration and/or the information about the first interval to the first communication device.

In a possible implementation, the first condition includes at least one of the following: the first interval changes; a variation of the first interval is greater than a first threshold; the information about the first DRX configuration changes; and a variation of the information about the first DRX configuration is greater than a second threshold.

In a possible implementation, the transceiver unit 1110 is further configured to: receive first request information from the first communication device, where the first request information is used to request the second communication device to send the information about the first DRX configuration and/or the information about the first interval to the first communication device.

In a possible implementation, the first DRX configuration includes a configuration of a third timer and a configuration of a fourth timer, and the second DRX configuration includes a configuration of a first timer and a configuration of a second timer; and the first timer and/or the third timer is used to indicate an expected minimum duration before resource configuration information or grant information for SL retransmission arrives, and the second timer and/or the fourth timer is used to indicate a maximum duration required for receiving the resource configuration information or the grant information for the SL retransmission.

In a ninth embodiment, the apparatus 1100 may be a first communication device or a chip in the first communication device.

The transceiver unit 1110 is configured to receive second information from a third communication device, where the second information indicates whether an SL HARQ feedback resource exists, and the SL HARQ feedback resource is used by the first communication device to send an SL HARQ feedback to the third communication device; and the processing unit 1120 is configured to send third information to a second communication device based on the second information, where the third information notifies whether to start, on a second DRX, a first timer and/or a second timer of a corresponding SL process, or the third information indicates whether the SL HARQ feedback resource exists; and/or the processing unit 1120 is further configured to: based on the second information, determine whether to start, on a first DRX, a third timer and/or a fourth timer of a corresponding SL process, and/or determine whether to start, on the second DRX, the first timer and/or the second timer of the corresponding SL process. The first DRX is DRX between the first communication device and the third communication device, the second DRX is DRX between the first communication device and the second communication device, the first timer and/or the third timer is used to indicate an expected minimum duration before resource configuration information or grant information for SL retransmission arrives, and the second timer and/or the fourth timer is used to indicate a maximum duration required for receiving the resource configuration information or the grant information for the SL retransmission.

In a possible implementation, that the second information indicates whether an SL HARQ feedback resource exists includes: the second information indicates whether the SL HARQ feedback resource exists in a first SL process or a first SL transport block TB or does not exist.

In a possible implementation, when the second information indicates that the SL HARQ feedback resource exists, the third information is used to instruct to start the first timer and/or the second timer in an SL process corresponding to the second DRX, or the third information indicates that the SL HARQ feedback resource exists; and/or when a first condition is met, the first communication device starts, on the first DRX, the third timer and/or the fourth timer of the corresponding SL process, and/or when a second condition is met, the first communication device starts, on the second DRX, the first timer and/or the second timer of the corresponding SL process.

In a possible implementation, when the second information indicates that no SL HARQ feedback resource exists, the second information notifies that the first timer and/or the second timer in an SL process corresponding to the second DRX is not started; or the second information indicates that no SL HARQ feedback resource exists; and/or when the first condition is met, the first communication device does not start, on the first DRX, the third timer and/or the fourth timer of the corresponding SL process, and/or when the second condition is met, the first communication device does not start, on the second DRX, a first timer and/or a second timer of the corresponding SL process.

In a ninth embodiment, the apparatus 1100 may be a third communication device or a chip in the third communication device.
a transceiver unit 1110 is configured to receive third information from a first communication device, where the third information notifies whether to start, on a second DRX, a first timer and/or a second timer of a corresponding SL process, or the third information indicates whether an SL HARQ feedback resource exists; and a processing unit 1120 is configured to determine, based on the third information, whether to start, on the second DRX, the first timer and/or the second timer of the corresponding SL process, where the second DRX is DRX between the first communication device and the second communication device, the first timer is used to indicate an expected minimum duration before resource configuration information or grant information for SL retransmission arrives, and the second timer is used to indicate a maximum duration required for receiving the resource configuration information or the grant information for the SL retransmission.

In a possible implementation, when the third information is used to instruct to start the first timer and/or the second timer in an SL process corresponding to the second DRX, or when the third information indicates that when the SL HARQ feedback resource exists, and a third condition is met, a second terminal device starts the first timer and/or the second timer of the corresponding SL process.

In a possible implementation, when the third information is used to instruct not to start the first timer and/or the second timer in the SL process corresponding to the second DRX, or when the third information indicates that when the SL HARQ feedback resource exists, and the third condition is met, the second communication device does not start the first timer and/or the second timer of the corresponding SL process.

It should be understood that division of units in the apparatus is merely logical function division, and can be fully or partially integrated into a physical entity in actual implementation, or physically separated. In addition, all units in the apparatus may be implemented in a form of software invoking by a processing element; or can also be implemented in the form of hardware. Alternatively, some units may be implemented in a form of software invoking by a processing element, and some units may be implemented in a form of hardware. For example, each unit may be a separately disposed processing element, or may be integrated into a chip of the apparatus for implementation. In addition, each unit may also be stored in a memory in a form of a program to be invoked by a processing element of the apparatus to perform a function of the unit. In addition, all or some of these units may be integrated, or may be implemented independently. The processing element described herein may also be a processor, and may be an integrated circuit having a signal processing capability. During implementation, steps according to the foregoing methods or the foregoing units may be implemented by using a hardware integrated logic circuit in a processor element, or may be implemented in the form of software invoked by the processing element.

For example, a unit in any one of the foregoing apparatuses may be one or more integrated circuits configured to implement the foregoing method, for example, one or more application specific integrated circuits (application specific integrated circuit, ASIC), one or more microprocessors (digital signal processor, DSP), or one or more field programmable gate arrays (field programmable gate array, FPGA), or a combination of at least two of these integrated circuit forms. For another example, when the units in the apparatus may be implemented in a form of a program scheduled by the processing element, the processing element may be a general-purpose processor, for example, a central processing unit (central processing unit, CPU) or another processor that can invoke the program. For still another example, the units may be integrated and implemented in a form of a system-on-a-chip (system-on-a-chip, SOC).

The transceiver unit 1110 may be an interface circuit of the apparatus, and is configured to receive a signal from another apparatus or send a signal to another apparatus. For example, when the apparatus is implemented as a chip, the transceiver unit 1110 is an interface circuit, of the chip, that is configured to receive a signal from another chip or apparatus, or an interface circuit configured to send a signal to another chip or apparatus.

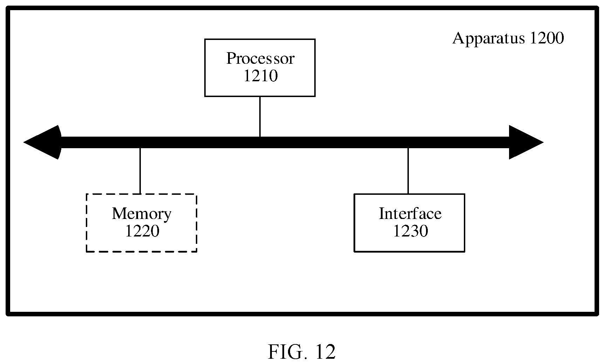

FIG. 12 is a schematic diagram of an apparatus 1200 according to an embodiment of this application. The apparatus is configured to implement a function of the first communication device, the second communication device, or the third communication device according to the foregoing method embodiment. As shown in FIG. 12, the apparatus includes: a processor 1210 and an interface 1230. Optionally, the apparatus may further include a memory 1220. The interface 1230 is configured to communicate with another device.

The method executed by the first communication device and the second communication device in the foregoing embodiments may be implemented by the processor 1210 by invoking a program stored in the memory (which may be a memory 1220 in a first communication device, a second communication device, or a third communication device, or may be an external memory). That is, the first communication device, the second communication device, or the third communication device may include a processor 1210. The processor 1210 invokes a program in a memory to perform the method performed by the first communication device and the second communication device according to the foregoing method embodiments. The processor herein may be an integrated circuit having a signal processing capability, for example, a CPU. The first communication device or the second communication device may be implemented by one or more integrated circuits configured to implement the above methods. For example: one or more ASICs, one or more microprocessor DSPs, one or more FPGAs, or a combination of at least two of these integrated circuit forms. Alternatively, the foregoing implementations may be combined.

Specifically, a function/an implementation process of the transceiver unit 1110 and the processing unit 1120 in FIG. 11 may be implemented by the processor 1210 in the apparatus 1200 shown in FIG. 12 by invoking a computer execution command stored in the memory 1220. Alternatively, a function/an implementation process of the processing unit 1120 in FIG. 11 may be implemented by the processor 1210 in the apparatus 1200 shown in FIG. 12 by invoking a computer execution command stored in the memory 1220. A function/an implementation process of the transceiver unit 1110 in FIG. 11 may be implemented by using an interface 1230 in the apparatus 1200 shown in FIG. 12.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of the present invention.

This application further provides a computer-readable medium, storing a computer program thereon. When the computer program is executed by a computer, a function of any one of the foregoing method embodiments is implemented.

This application further provides a computer program product. When the computer program product is executed by a computer, a function of any one of the foregoing method embodiments is implemented.

It may be clearly understood by a person skilled in the art that, for the purpose of convenient and brief description, for a detailed working process of the foregoing system, apparatus, and unit, refer to a corresponding process according to the foregoing method embodiments. Details are not described herein again.

All or a part of the foregoing embodiments may be implemented by software, hardware, firmware, or any combination thereof. When software implementation is used, all or a part of embodiments may be implemented in a form of a computer program product. The computer program product includes one or more computer instructions. When the computer program instructions are loaded and executed on a computer, the procedures or functions according to embodiments of this application are all or partially generated. The computer may be a general purpose computer, a dedicated computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device integrating one or more usable media, such as a server or a data center. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

The various illustrative logical units and circuits described in embodiments of this application may implement or operate the described functions by using a general-purpose processor, a digital signal processor, an application specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. A processor may also be achieved through the combination of computing apparatuses, such as combination of a digital signal processor and a microprocessor, multiple microprocessors, one or more microprocessors and one digital signal processor core, or any other similar configurations.

Steps of the methods or algorithms described in embodiments of this application may be directly embedded into hardware, a software unit executed by a processor, or a combination thereof. The software unit may be stored in a random access memory (random access memory, RAM), a flash memory, a read-only memory (read-only memory, ROM), EPROM memory, EEPROM memory, register, hard disk, removable disc, CD-ROM or any other form of storage media in the art. For example, storage media may be connected to a processor so that the processor may read information from the storage media and may save the information in the storage media. Alternatively, the storage media may also be integrated into the processor. The processor and the storage media may be disposed in an ASIC.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In one or more example designs, the foregoing functions described in this application may be implemented by hardware, software, firmware, or any combination of the three. If the present invention is implemented by software, these functions may be stored in computer-readable media or are transmitted to the computer-readable media in a form of one or more instructions or code. The computer-readable media includes computer storage media or communication media that facilitates transfer of a computer program from one place to another. The storage media may be an available medium that may be accessed by any general or special computer. For example, such computer-readable media may include but is not limited to a RAM, a ROM, an EEPROM, a CD-ROM, or another optical disc storage, a disk storage or another magnetic storage apparatus, or any other medium that may be used to carry or store program code, where the program code is in a form of an instruction or a data structure and in a form that can be read by a general or special computer or a general or special processing unit. In addition, any connection may be appropriately defined as computer-readable media. For example, if software is transmitted from a website, a server, or another remote resource by using a coaxial cable, an optical fiber computer, a twisted pair, a digital subscriber line (DSL) or in a wireless manner, such as infrared, radio, or microwave, the software is included in defined computer-readable media. The disk (disk) and the disc (disc) include a compressed disc, a laser disc, an optical disc, a digital versatile disc (digital versatile disc, DVD), a floppy disk, and a Blu-ray disc. The disk usually copies data magnetically. Discs usually optically reproduce data by laser. The foregoing combination may also be included in the computer-readable media.

A person skilled in the art should be aware that in one or more of the foregoing examples, the functions described in this application may be implemented by hardware, software, firmware, or any combination thereof. When software implementation is used, these functions may be stored in a computer-readable medium or transmitted as one or more instructions or code in a computer-readable medium. The computer-readable medium includes a computer storage medium and a communication medium, where the communication medium includes any medium that facilitates transfer of a computer program from one place to another. The storage medium may be any available medium accessible to a general purpose or a dedicated computer.

The objectives, technical solutions, and benefits of this application are further described in detail in the foregoing specific embodiments. It should be understood that the foregoing descriptions are merely specific embodiments of this application, but are not intended to limit the protection range of this application. Any modification, equivalent replacement, or improvement made based on the technical solutions of this application shall fall within the protection range of this application. The foregoing description of the specification of this application may enable any technology in the art to utilize or implement the content of this application, and any modification based on the disclosed content shall be considered obvious in the art. The basic principles described in this application may be applied to other variations without departing from the essence and scope of the invention of this application. The content disclosed in this application is not limited to the described embodiments and designs, but may further be extended to a maximum scope that is consistent with the principles of this application and new features disclosed in this application.

Although this application has been described with reference to specific features and embodiments thereof, it is obvious that various modifications and combinations may be made to this application without departing from the spirit and scope of this application. Correspondingly, the specification and the accompanying drawings are merely an example description of this application defined by the following claims, and are deemed to have covered any and all modifications, variations, combinations, or equivalents that fall within the scope of this application. It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A sidelink communication method, comprising:
receiving, by a first communication device, sidelink control information from a second communication device;
starting, by the first communication device, a first timer based on a sidelink SL hybrid automatic repeat request HARQ feedback resource, wherein the SL HARQ feedback resource is used for transmitting a HARQ feedback of the sidelink control information or SL data scheduled by using the sidelink control information; and
starting or skipping starting, by the first communication device, a second timer based on the first timer, wherein
the first timer is used to indicate an expected minimum duration before resource configuration information or grant information for SL retransmission arrives, and the second timer is used to indicate a maximum duration required for receiving the resource configuration information or the grant information for the SL retransmission.

2. The method according to claim 1, wherein the starting, by the first communication device, a first timer based on an SL HARQ feedback resource comprises:
starting, by the first communication device, the first timer in a first time unit in the SL HARQ feedback resource; or
starting, by the first communication device, the first timer in a first time unit in a configured SL HARQ feedback resource; or
starting, by the first communication device, the first timer in a first time unit after the SL HARQ feedback resource; or
starting, by the first communication device, the first timer in a first time unit after a configured SL HARQ feedback resource.

3. The method according to claim 1 or 2, wherein the starting, by the first communication device, a first timer based on an SL HARQ feedback resource comprises:
failing to send or skipping sending, by the first communication device, the HARQ feedback, wherein the HARQ feedback is an acknowledgment ACK or a negative acknowledgment NACK; and
starting, by the first communication device, the first timer based on the SL HARQ feedback resource.

4. The method according to claim 1 or 2, wherein the starting or skipping starting, by the first communication device, a second timer based on the first timer comprises:
when the first timer expires, and the first communication device successfully decodes or fails to decode the sidelink control information or the SL data scheduled by using the sidelink control information, starting, by the first communication device, the second timer; or
when the first timer expires, starting, by the first communication device, the second timer.

5. The method according to claim 3, wherein the failing to send or skipping sending, by the first communication device, the HARQ feedback comprises:
failing to send or skipping sending, by the first communication device, the HARQ feedback due to prioritization prioritization or a conflict.

6. A sidelink communication method, comprising:
sending, by a second communication device, sidelink control information to a first communication device;
starting, by the second communication device, a first timer based on a sidelink SL hybrid automatic repeat request HARQ feedback resource; and
starting or skipping starting, by the second communication device, a second timer based on the first timer, wherein
the first timer is used to indicate an expected minimum duration before resource configuration information or grant information for SL retransmission arrives, and the second timer is used to indicate a maximum duration required for receiving the resource configuration information or the grant information for the SL retransmission.

7. The method according to claim 6, wherein the starting, by the second communication device, a first timer based on an SL HARQ feedback resource comprises:
starting, by the second communication device, the first timer in a first time unit in the SL HARQ feedback resource; or
starting, by the second communication device, the first timer in a first time unit in a configured SL HARQ feedback resource; or
starting, by the second communication device, the first timer in a first time unit after the SL HARQ feedback resource; or
starting, by the second communication device, the first timer in a first time unit after a configured SL HARQ feedback resource.

8. The method according to claim 6 or 7, wherein if the second timer is running, the method further comprises: stopping, by the second communication device, the second timer.

9. The method according to any one of claims 6 to 8, wherein the starting or skipping starting, by the second communication device, a second timer based on the first timer comprises:
when the first timer expires, starting, by the second communication device, the second timer.

10. The method according to any one of claims 6 to 8, wherein the starting or skipping starting, by the second communication device, a second timer based on the first timer comprises:
when the first timer expires, if the second communication device successfully receives a HARQ feedback, the HARQ feedback comprises a HARQ feedback of the sidelink control information or SL data scheduled by using the sidelink control information, and the HARQ feedback is a negative acknowledgment NACK, or if the second communication device fails to receive a HARQ feedback, or if the second communication device sends a HARQ feedback to a third communication device and the HARQ feedback is a NACK, starting, by the second communication device, the second timer.

11. A sidelink communication method, comprising:
receiving, by a first communication device, information about a first discontinuous reception DRX configuration and/or information about a first interval from a second communication device, wherein the first DRX configuration is a DRX configuration between the first communication device and a third communication device, the first interval is an interval between a first resource and a second resource, the first resource is a resource for the second communication device to send a sidelink SL hybrid automatic repeat request HARQ feedback to the third communication device, and the second resource is a resource for the first communication device to send an SL HARQ feedback to the second communication device;
determining, by the first communication device, a second DRX configuration based on the information about the first DRX configuration and/or the information about the first interval, wherein the second DRX configuration is a DRX configuration between the first communication device and the second communication device; or
sending, by the first communication device, the information about the first DRX configuration and/or the information about the first interval to the third communication device.

12. The method according to claim 11, wherein the first interval comprises a minimum value of the interval between the first resource and the second resource.

13. The method according to claim 11 or 12, further comprising:
when the first DRX configuration does not match the second DRX configuration, sending, by the first communication device, first information to the second communication device, wherein the first information notifies the second communication device that the first DRX configuration does not match the second DRX configuration.

14. The method according to any one of claims 11 to 13, further comprising:
sending, by the first communication device, first request information to the second communication device, wherein the first request information is used to request the second communication device to send the information about the first DRX configuration and/or the information about the first interval to the first communication device.

15. The method according to any one of claims 11 to 14, wherein the first DRX configuration comprises a configuration of a third timer and a configuration of a fourth timer, and the second DRX configuration comprises a configuration of a first timer and a configuration of a second timer; and
the first timer and/or the third timer is used to indicate an expected minimum duration before resource configuration information or grant information for SL retransmission arrives, and the second timer and/or the fourth timer is used to indicate a maximum duration required for receiving the resource configuration information or the grant information for the SL retransmission.

16. A sidelink communication method, comprising:
determining, by a second communication device, information about a first discontinuous reception DRX configuration and/or information about a first interval, wherein the first DRX configuration is a DRX configuration between the second communication device and a third communication device, the first interval is an interval between a first resource and a second resource, the first resource is a resource for the second communication device to send a sidelink SL hybrid automatic repeat request HARQ feedback to the third communication device, and the second resource is a resource for the first communication device to send an SL HARQ feedback to the second communication device; and
sending, by the second communication device, the information about the first DRX configuration and/or the information about the first interval to the first communication device.

17. The method according to claim 16, wherein the first interval comprises a minimum value of the interval between the first resource and the second resource.

18. The method according to claim 16 or 17, further comprising:
receiving, by the second communication device, first information from the first communication device, wherein the first information notifies the second communication device that the first DRX configuration does not match a second DRX configuration, the second DRX configuration is DRX between the first communication device and the second communication device, and the second DRX configuration is used for SL communication between the first communication device and the second communication device, or the second DRX configuration is used for the first communication device to receive information sent by the second communication device.

19. The method according to any one of claims 16 to 18, wherein when a first condition is met, the step of sending, by the second communication device, the information about the first DRX configuration and/or the information about the first interval to the first communication device is performed.

20. The method according to claim 19, wherein the first condition comprises at least one of the following:
the first interval changes;
a variation of the first interval is greater than a first threshold;
the information about the first DRX configuration changes; and
a variation of the information about the first DRX configuration is greater than a second threshold.

21. The method according to any one of claims 16 to 20, further comprising:
receiving, by the second communication device, first request information from the first communication device, wherein the first request information is used to request the second communication device to send the information about the first DRX configuration and/or the information about the first interval to the first communication device.

22. The method according to any one of claims 16 to 21, wherein the first DRX configuration comprises a configuration of a third timer and a configuration of a fourth timer, and the second DRX configuration comprises a configuration of a first timer and a configuration of a second timer; and
the first timer and/or the third timer is used to indicate an expected minimum duration before resource configuration information or grant information for SL retransmission arrives, and the second timer and/or the fourth timer is used to indicate a maximum duration required for receiving the resource configuration information or the grant information for the SL retransmission.

23. A sidelink communication apparatus, comprising:
a transceiver unit, configured to receive sidelink control information from a second communication device; and
a processing unit, configured to start a first timer based on a sidelink SL hybrid automatic repeat request HARQ feedback resource, wherein the SL HARQ feedback resource is used for transmitting a HARQ feedback of the sidelink control information or SL data scheduled by using the sidelink control information, wherein
the processing unit is further configured to start or skip starting a second timer based on the first timer; and
the first timer is used to indicate an expected minimum duration before resource configuration information or grant information for SL retransmission arrives, and the second timer is used to indicate a maximum duration required for receiving the resource configuration information or the grant information for the SL retransmission.

24. The apparatus according to claim 23, wherein the starting the first timer based on the SL HARQ feedback resource comprises:
starting the first timer in a first time unit in the SL HARQ feedback resource; or
starting the first timer in a first time unit in a configured SL HARQ feedback resource; or
starting the first timer in a first time unit after the SL HARQ feedback resource; or
starting the first timer in a first time unit after a configured SL HARQ feedback resource.

25. The apparatus according to claim 23 or 24, wherein the starting the first timer based on the SL HARQ feedback resource comprises:
failing to send or skipping sending the HARQ feedback, wherein the HARQ feedback is an acknowledgment ACK or a negative acknowledgment NACK; and
starting the first timer based on the SL HARQ feedback resource.

26. The apparatus according to claim 23 or 24, wherein the starting or skipping starting the second timer based on the first timer comprises:
when the first timer expires, and the sidelink control information or the SL data scheduled by using the sidelink control information is successfully decoded or fails to be decoded, starting the second timer; or
when the first timer expires, starting the second timer.

27. The apparatus according to claim 25, wherein the failing to send or skipping sending the HARQ feedback comprises:
failing to send or skipping sending the HARQ feedback due to prioritization prioritization or a conflict.

28. A sidelink communication apparatus, comprising:
a transceiver unit, configured to send sidelink control information to a first communication device; and
a processing unit, configured to start a first timer based on a sidelink SL hybrid automatic repeat request HARQ feedback resource, wherein
the processing unit is further configured to start or skip starting a second timer based on the first timer; and
the first timer is used to indicate an expected minimum duration before resource configuration information or grant information for SL retransmission arrives, and the second timer is used to indicate a maximum duration required for receiving the resource configuration information or the grant information for the SL retransmission.

29. The apparatus according to claim 28, wherein the starting the first timer based on the SL HARQ feedback resource comprises:
starting the first timer in a first time unit in the SL HARQ feedback resource; or
starting the first timer in a first time unit in a configured SL HARQ feedback resource; or
starting the first timer in a first time unit after the SL HARQ feedback resource; or
starting the first timer in a first time unit after a configured SL HARQ feedback resource.

30. The apparatus according to claim 28 or 29, wherein if the second timer is running, the processing unit is further configured to: stop the second timer.

31. The apparatus according to any one of claims 28 to 30, wherein the starting or skipping starting the second timer based on the first timer comprises:
when the first timer expires, starting the second timer.

32. The apparatus according to any one of claims 28 to 30, wherein the starting or skipping starting the second timer based on the first timer comprises:
when the first timer expires, if a HARQ feedback is successfully received, the HARQ feedback comprises a HARQ feedback of the sidelink control information or SL data scheduled by using the sidelink control information, and the HARQ feedback is a negative acknowledgment NACK, or if a HARQ feedback fails to be received, or if a HARQ feedback is sent to a third communication device and the HARQ feedback is a NACK, starting the second timer.

33. A sidelink communication apparatus, comprising:
a transceiver unit, configured to receive information about a first discontinuous reception DRX configuration and/or information about a first interval from a second communication device, wherein the first DRX configuration is a DRX configuration between a first communication device and a third communication device, the first interval is an interval between a first resource and a second resource, the first resource is a resource for the second communication device to send a sidelink SL hybrid automatic repeat request HARQ feedback to the third communication device, and the second resource is a resource for the first communication device to send an SL HARQ feedback to the second communication device; and
a processing unit, configured to determine a second DRX configuration based on the information about the first DRX configuration and/or the information about the first interval, wherein the second DRX configuration is a DRX configuration between the first communication device and the second communication device; wherein
the transceiver unit is further configured to send the information about the first DRX configuration and/or the information about the first interval to the third communication device.

34. The apparatus according to claim 33, wherein the first interval comprises a minimum value of the interval between the first resource and the second resource.

35. The apparatus according to claim 33 or 34, wherein the transceiver unit is further configured to:
when the first DRX configuration does not match the second DRX configuration, send first information to the second communication device, wherein the first information notifies the second communication device that the first DRX configuration does not match the second DRX configuration.

36. The apparatus according to any one of claims 33 to 35, wherein the transceiver unit is further configured to:
send first request information to the second communication device, wherein the first request information is used to request the second communication device to send the information about the first DRX configuration and/or the information about the first interval to the first communication device.

37. The apparatus according to any one of claims 33 to 36, wherein the first DRX configuration comprises a configuration of a third timer and a configuration of a fourth timer, and the second DRX configuration comprises a configuration of a first timer and a configuration of a second timer; and
the first timer and/or the third timer is used to indicate an expected minimum duration before resource configuration information or grant information for SL retransmission arrives, and the second timer and/or the fourth timer is used to indicate a maximum duration required for receiving the resource configuration information or the grant information for the SL retransmission.

38. A sidelink communication apparatus, comprising:
a processing unit, configured to determine information about a first discontinuous reception DRX configuration and/or information about a first interval, wherein the first DRX configuration is a DRX configuration between a second communication device and a third communication device, the first interval is an interval between a first resource and a second resource, the first resource is a resource for the second communication device to send a sidelink SL hybrid automatic repeat request HARQ feedback to the third communication device, and the second resource is a resource for the first communication device to send an SL HARQ feedback to the second communication device; and
a transceiver unit, configured to send the information about the first DRX configuration and/or the information about the first interval to the first communication device.

39. The apparatus according to claim 38, wherein the first interval comprises a minimum value of the interval between the first resource and the second resource.

40. The apparatus according to claim 38 or 39, wherein the transceiver unit is further configured to:
receive first information from the first communication device, wherein the first information notifies the second communication device that the first DRX configuration does not match a second DRX configuration, the second DRX configuration is DRX between the first communication device and the second communication device, and the second DRX configuration is used for SL communication between the first communication device and the second communication device, or the second DRX configuration is used for the first communication device to receive information sent by the second communication device.

41. The apparatus according to any one of claims 38 to 40, wherein when a first condition is met, the transceiver unit performs the step of sending the information about the first DRX configuration and/or the information about the first interval to the first communication device.

42. The apparatus according to claim 41, wherein the first condition comprises at least one of the following:
the first interval changes;
a variation of the first interval is greater than a first threshold;
the information about the first DRX configuration changes; and
a variation of the information about the first DRX configuration is greater than a second threshold.

43. The apparatus according to any one of claims 38 to 42, wherein the transceiver unit is further configured to:
receive first request information from the first communication device, wherein the first request information is used to request the second communication device to send the information about the first DRX configuration and/or the information about the first interval to the first communication device.

44. The apparatus according to any one of claims 38 to 43, wherein the first DRX configuration comprises a configuration of a third timer and a configuration of a fourth timer, and the second DRX configuration comprises a configuration of a first timer and a configuration of a second timer; and
the first timer and/or the third timer is used to indicate an expected minimum duration before resource configuration information or grant information for SL retransmission arrives, and the second timer and/or the fourth timer is used to indicate a maximum duration required for receiving the resource configuration information or the grant information for the SL retransmission.

45. An apparatus, comprising a processor and a memory, wherein the processor is coupled to the memory, and the processor is configured to perform the method according to any one of claims 1 to 5, or configured to perform the method according to any one of claims 11 to 15.

46. An apparatus, comprising a processor and a memory, wherein the processor is coupled to the memory, and the processor is configured to perform the method according to any one of claims 6 to 10, or configured to perform the method according to any one of claims 16 to 22.

47. A communication system, comprising the apparatus according to any one of claims 23 to 27 and the apparatus according to any one of claims 28 to 32, or comprising the apparatus according to any one of claims 33 to 37 and the apparatus according to any one of claims 38 to 44, or comprising the apparatus according to claim 45 and the apparatus according to claim 46.

48. A computer-readable storage medium, comprising an instruction, wherein the instruction, when run on a computer, causes the computer to perform the method according to any one of claims 1 to 5 or the method according to any one of claims 11 to 15.

49. A computer-readable storage medium, comprising an instruction, wherein the instruction, when run on a computer, causes the computer to perform the method according to any one of claims 6 to 10 or the method according to any one of claims 16 to 22.

50. A computer program product, comprising an instruction, wherein when the instruction is run on a computer, the method according to any one of claims 1 to 5 or the method according to any one of claims 11 to 15 is implemented.

51. A computer program product, comprising an instruction, wherein when the instruction is run on a computer, the method according to any one of claims 6 to 10 or the method according to any one of claims 16 to 22 is implemented.
